# EUROPEAN PATENT SPECIFICATION

(11) **EP 3 430 824 B1**
(45) Date of publication and mention of the grant of the patent: **24.02.2021**
(21) Application number: 17789888.9
(22) Date of filing: 25.04.2017
(51) Int. Cl.: H04L 12/24, H04L 12/28, H04W 4/80, H04W 76/14, H04W 76/15

(54) **METHODS AND SYSTEMS FOR MANAGING INTER-DEVICE CONNECTIVITY**
VERFAHREN UND SYSTEME ZUR VERWALTUNG DER KONNEKTIVITÄT ZWISCHEN VORRICHTUNGEN
PROCÉDÉS ET SYSTÈMES DE GESTION D'UNE CONNECTIVITÉ ENTRE DISPOSITIFS

(30) Priority: 25.04.2016 IN 201641014347; 20.02.2017 IN 201641014347
(43) Date of publication of application: 23.01.2019
(73) Proprietor: Samsung Electronics Co., Ltd., Suwon-si, Gyeonggi-do 16677 (KR)
(72) Inventor: KANDUR RAJA, Barath Raj, Karnataka 560037 (IN); KUMAR S, Arjun Raj, Tamil Nadu 636008 (IN); THANGADORAI, Kavin Kumar, Karnata 560100 (IN); MURUGESAN, Kumar, Karnataka 560037 (IN)
(74) Representative: Nederlandsch Octrooibureau
(86) International application number: PCT/KR2017/004384
(87) International publication number: WO 2017/188704

(56) References cited:
- EP-A1- 2 890 138
- WO-A1-2016/034488
- WO-A1-2016/047902
- US-A1- 2008 186 875
- US-A1- 2010 232 317
- US-A1- 2014 115 421
- US-A1- 2014 222 944
- US-A1- 2015 222 946
- US-A1- 2015 341 234

## Description

### Technical Field

Methods and apparatuses consistent with exemplary embodiments generally relate to inter-device connectivity, and more particularly to managing inter-device connectivity among a plurality of devices.

### Background Art

Internet of Things (IoT), Device to Device (D2D) communication and similar technologies enable interconnection and communication between pluralities of devices (electronic devices) of a user. These electronic devices when connected with each other can communicate with each other and enable the user to access, control, and view a second device from a first device. However, with current methods, setting up or configuring a connection between the electronic devices may be tedious, especially for novice users.

Currently, to inter-connect or disconnect any two devices, a user has to individually attend the device settings at each device, which causes inconvenience and degrades user experience. Further, connection-disconnection procedure may not be convenient for devices without a display, such as headphones, fitness trackers, and so on. As the number of devices available for inter-connection increases, this task can become more complicated for a general user. Further, the connection between the devices may not be robust enough to enable communication between the connected devices in a seamless manner. Moreover, each device may utilize different platforms that can create additional complexity for the user to manage these inter-connections due to incompatibility issues during setting up the connections among devices. For example, currently when the user wants to mirror the user's mobile phone on a television, the user has to enable screen mirror settings both in the mobile phone and on the television, before setting up the connection between the devices. If the user wants to mirror a tablet on the same television, the user has to repeat the above mentioned steps for the tablet and the television. This effectively degrades the user experience.

WO2016047902 discloses a mobile terminal that can detect the operation states of a plurality of devices and a method for controlling the mobile terminal.

### Disclosure of Invention

### Technical Problem

The present disclosure provides methods and systems for managing device connectivity in a multi device environment through a device connectivity management platform implemented on a primary device, wherein the device connectivity management platform provides a user with an interactive User Interface (UI) to manage device connections and services among a plurality of secondary electronic devices in the multi-device environment.

The present disclosure also provides methods and systems to enable the user to access the device connectivity management platform through a cloud network for remotely managing device connectivity among a plurality of secondary devices.

### Solution to Problem

According to an aspect of an exemplary embodiment, a method for managing device connectivity between a plurality of secondary devices by a primary device is provided according to independent Claim 1.

The acquiring of the history information may include receiving advertised packets from the at least one secondary device periodically, determining that additional data is available from the at least one secondary device, establishing a connection between the primary device and the at least one secondary device, receiving the additional data from the at least one secondary device, and acquiring the history information from the additional data.

The acquiring of the history information may include receiving advertised packets including the history information from the at least one secondary device periodically, and storing the history information, when the advertised packets are received.

The method may further include identifying whether the primary device has an authority to control connections corresponding to each of the plurality of secondary devices, wherein the displaying of the plurality of secondary devices may include displaying a secondary device for which the primary device has the authority.

The method may further include identifying a plurality of priority levels corresponding to the plurality of secondary devices in relation to the at least one secondary device, wherein the displaying of the plurality of secondary devices may include classifying the plurality of secondary devices according to the plurality of priority levels, and displaying the plurality of secondary devices according to the plurality of priority levels.

The plurality of priority levels may be determined based on at least one from among hop count, ownership of the plurality of secondary devices, access points corresponding to the plurality of secondary devices, locations of the plurality of secondary devices, accessibility of the primary device, and number of previous connections.

The selected secondary devices may include a first selected secondary device and a second selected secondary device, and in response to the first selected secondary device being connected with an unselected secondary device of the plurality of secondary devices, the unselected secondary device having a same priority level as the second selected secondary device, the changing of the connection may include disestablishing a connection between the first selected secondary device and the unselected secondary device, and establishing the connection between the selected secondary devices.

The method may further include identifying a service available from the selected secondary devices, and changing the connection between the selected secondary devices using the service.

The method may further include displaying a list of services, the list including the service, and changing the connection between the selected secondary devices using the service selected from the list.

The method may further include updating the displayed plurality of connection states when the connection of the two secondary devices is changed.

According to another aspect of an exemplary embodiment, an electronic device is provided according to independent Claim 7.

The processor may be further configured to receive advertised packets from the at least one secondary device periodically by the transceiver, determine that additional data is available from the at least one secondary device, establish a connection between the electronic device and the at least one secondary device, receive the additional data from the at least one secondary device by the transceiver, and acquire the history information from the additional data.

The processor may be further configured to identify whether the electronic device has an authority to control connections corresponding to each of the plurality of secondary devices, and control the display to display a secondary device for which the electronic device has the authority.

The processor may be further configured to identify a plurality of priority levels corresponding to the plurality of secondary devices in relation to the at least one secondary device, classify the plurality of secondary devices according to the plurality of priority levels, and control the display to display the plurality of secondary devices according to the plurality of priority levels.

The plurality of priority levels may be determined based on at least one from among hop count, ownership of the plurality of secondary devices, access points corresponding to the plurality of secondary devices, locations of the plurality of secondary devices, accessibility of the primary device, and number of previous connections.

The selected secondary devices may include a first selected secondary device and a second selected secondary device, and in response to the first selected secondary device being connected with an unselected secondary device of the plurality of secondary devices, the unselected secondary device having a same priority level as the second selected secondary device, the processor may be further configured to control to disestablish a connection between the first selected secondary device and the unselected secondary device, and establish the connection between the selected secondary devices.

The processor may be further configured to identify a service available from the selected secondary devices, and change the connection between the selected secondary devices using the service.

The processor may be further configured to control the display to display a list of services, the list including the service, and change the connection between the selected secondary devices using the service selected from the list.

The processor may be further configured to update the displayed plurality of connection states when the connection of the two secondary devices is changed.

### Advantageous Effects of Invention

The present disclosure provides methods and systems for managing device connectivity in a multi device environment through a device connectivity management platform implemented on a primary device, wherein the device connectivity management platform provides a user with an interactive User Interface (UI) to manage device connections and services among a plurality of secondary electronic devices in the multi-device environment.

The present disclosure also provides methods and systems to enable the user to access the device connectivity management platform through a cloud network for remotely managing device connectivity among a plurality of secondary devices.

These and other aspects of the exemplary embodiments herein will be better appreciated and understood when considered in conjunction with the following description and the accompanying drawings. It should be understood, however, that the following descriptions, while indicating exemplary embodiments and numerous specific details thereof, are given by way of illustration and not of limitation.

### Brief Description of Drawings

Exemplary embodiments are illustrated in the accompanying drawings, throughout which like reference letters indicate corresponding parts in the various figures. The exemplary embodiments herein will be better understood from the following description with reference to the drawings, in which:
FIG. 1 illustrates an example multi-device environment providing a device connectivity management platform for managing inter-device connectivity among a plurality of secondary devices for services within the multi-device environment, wherein the device connectivity management platform is implemented in a primary device, according to exemplary embodiments;
FIG. 2A, FIG. 2B and FIG. 2C illustrate a User Interface (UI) of the primary device enabling device connectivity management, according to exemplary embodiments;
FIG. 3A illustrates UI elements of the primary device that represent device state with reference to connections among the plurality of secondary devices, according to exemplary embodiments;
FIG. 3B illustrates UI elements of the primary device, including a grid of concentric circles, provided to the user to assign priority level to selected plurality of secondary devices, according to exemplary embodiments;
FIG. 3C illustrates UI elements of the primary device, providing options to the user to select a communication interface for the selected connection between the selected secondary devices, according to exemplary embodiments;
FIGs. 3D and FIG. 3E illustrates device convergence provided by the primary device according to exemplary embodiments;
FIG. 4 illustrates an example sequence diagram for discovery and connection establishment of the plurality of secondary devices from the primary device, according to exemplary embodiments;
FIG. 5 and FIG. 6 illustrate example sequence diagrams describing switching of connections among the plurality of secondary devices from the UI of the primary device for providing services in the multi-device environment, according to exemplary embodiments;
FIG. 7A and 7B illustrate a plurality of components of the primary device implementing the device connectivity management platform, according to the exemplary embodiments;
FIGs. 7C through 7E illustrate a method for discovering the plurality of secondary devices by the primary device, according to exemplary embodiments;
FIGs. 7F through 7H illustrate a method for connectivity services provided by the primary device to the discovered plurality of secondary devices, according to exemplary embodiments;
FIG. 8 is a flow diagram illustrating a method providing the device connectivity management platform for managing device connectivity in the multi-device environment, according to exemplary embodiments;
FIG. 9 illustrates the device connectivity management platform implemented on the primary device when the primary device is dedicated for device connectivity management functions, according to exemplary embodiments;
FIG. 10A and FIG. 10B illustrate UI with the plurality of secondary devices displayed after classifying the secondary devices based on one or more criteria, according to exemplary embodiments as;
FIG. 11 illustrates remote accessing of the device connectivity management platform of the primary device through a cloud network for remotely managing connectivity among the plurality of secondary devices, according to exemplary embodiments;
FIG. 12A illustrates detecting and adding a secondary device of interest to the plurality of secondary devices using a device focus mechanism, according to exemplary embodiments;
FIG. 12B illustrates providing voice commands through a microphone of the primary device for execution of at least one action by the secondary device of interest, according to exemplary embodiments;
FIG. 12C and FIG. 12D illustrates use case example, wherein the primary device provides voice extended device convergence for the interconnected plurality of secondary devices, according to exemplary embodiments;
FIG. 13 illustrates implementation of the device connectivity management platform on a smart watch hand gear functioning as the primary device, according to exemplary embodiments;
FIG. 14A illustrates the interactive UI of the primary device and FIG. 14B illustrate steps performed by the device connectivity management platform enabling playing audio/video content from a first secondary device on a second secondary device with control commands performed at the UI of the primary device 104, according to exemplary embodiments;
FIG. 15 illustrates a use case example, wherein the primary device classifies interconnected plurality of secondary devices into one or more subsets and displays the subsets on the interactive UI, according to exemplary embodiments; and
FIG. 16 illustrates use case example, wherein the primary device provides seamless continuity with a mesh network, according to exemplary embodiments.

### Best Mode for Carrying out the Invention

Exemplary embodiments and various features and advantageous details thereof are explained more fully with reference to the non-limiting exemplary embodiments that are illustrated in the accompanying drawings and detailed in the following description. Descriptions of well-known components and processing techniques are omitted so as to not unnecessarily obscure the exemplary embodiments herein. The examples used herein are intended merely to facilitate an understanding of ways in which the exemplary embodiments herein may be practiced and to further enable those of skill in the art to practice the exemplary embodiments herein. Accordingly, the examples should not be construed as limiting the scope of the exemplary embodiments herein.

Exemplary embodiments include methods and systems for managing device connectivity in a multi-device environment. Exemplary embodiments provide a device connectivity management platform that can be implemented on a primary device, for example an electronic device. The device connectivity management platform provides interactive User Interface (UI) that enables a user to manage device connections and services among a plurality of secondary devices, also referred as SDs, or as a plurality of electronic devices, in the multi-device environment from single point. Further, exemplary embodiments, not specifically claimed, allow a user to remotely access the device connectivity management platform through a cloud network enabling remote management of device connectivity among the plurality secondary devices.

User here can refer to a subject authorized to access the primary device and utilize functions provided by the device connectivity management platform of the primary device 104. The user can further configure the primary device to decide on, which devices may be included as the secondary devices.

In an exemplary embodiment, not specifically claimed, the primary device implementing the device connectivity management platform can be a dedicated electronic device configured to perform device connectivity management functions, wherein the dedicated device is equipped with an interactive display (UI).

In an exemplary embodiment, not specifically claimed, the primary device can be one among a plurality of secondary devices of the user such as a smart phone, a laptop, a palmtop, a tablet, a wearable device or any other electronic device providing an interactive UI and capable of inter-device communication.

In an exemplary embodiment, not specifically claimed, the secondary devices may include electronic devices with or without display screens that are registered or identified by the user as permanent devices such as speakers, head phones, mobiles, tablet, smart TV, a plurality of devices of a smart home network and the like that can be discovered and connected. Further, the secondary devices may also include electronic devices with or without display screens that are registered or identified by the user as Temporary Devices (TDs), wherein the TDs are secondary devices added temporarily by the user for a preset time span.

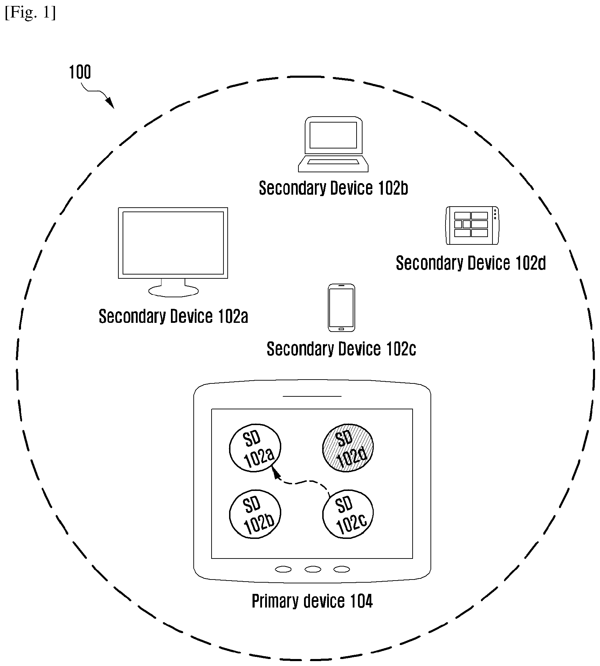

Referring now to the drawings, and more particularly to FIGS. 1 through 16, where similar reference characters denote corresponding features consistently throughout the figures, there are shown exemplary embodiments.

FIG. 1 illustrates an example multi-device environment 100 providing a device connectivity management platform for managing inter-device connectivity among a plurality of secondary devices (for example, 102a to 102n) for services within the multi-device environment 100, wherein the device connectivity management platform is implemented in a primary device 104, according to exemplary embodiments as disclosed herein. The primary device 104, through the device connectivity management platform implemented on the primary device 104, can be configured to detect all the secondary devices within a pre-defined area based on one or more parameters and publish them on the UI provided for the device connectivity management platform.

The detection of the secondary devices may be based on the one or more connectivity parameters. For example, the detected secondary devices can include devices connected to a single or known Access Point (AP). Further, the detected secondary devices can include devices registered with a same account or the like that may be discoverable through one or more available communication interfaces such as Bluetooth Low Energy (BLE), Wi-Fi, Wi-Fi HaLow, BLE, Oxygen MESH, or the like. Further, the detected secondary devices may include devices that are not connected or not discoverable with reference to other secondary devices already detected. However, the unconnected or non-discoverable devices within the multi-device environment and lying within the pre-defined area may be known to detected secondary devices or may be relevant with respect to the primary device 104. Further, the compatibility of the detected secondary devices can be displayed to the user. According to an exemplary embodiment, non-compatible secondary devices can be displayed in the primary device 104 with a visual effect different from that of compatible secondary devices. For example, non-compatible secondary devices may be displayed on the UI as grayed devices.

In some exemplary embodiments, the primary device does not have control authority to control the connection with other devices for some of the devices in the plurality of secondary devices. The control authority can be determined based on at least one of the attributes of a secondary device and the configuration of a user of the secondary device. In this example, the primary device only displays in the UI a secondary device with control authority, and can exclude secondary devices without control authority. In this example, the primary device identifies whether the primary device has an authority to control the connection with other secondary devices for each of the secondary devices.

According to various exemplary embodiments, the primary device can identify a connection state between secondary devices based on a signal received from the secondary devices. The connection state between the secondary devices can be included in history information. For example, history information may include information relating to a current connection and at least one previous connection with other secondary devices. The history information can include advertised packets output from the secondary devices and the primary device can identify the history information of each secondary device from the received advertised packets. According to another exemplary embodiment, not specifically claimed, the advertised packets output from the secondary devices can include simple information such as the device type (for example, mobile, TV, speaker, etc.), identity (for example, MAC, IP address, etc.), and so on, and in addition, can include whether the transmission of more data is available. If an advertised packet received from a certain secondary device shows that more data is available, the primary device can establish a connection with the secondary device and can request more data from the secondary device. Here, more data can include the history information including current connection and at least one previous connection with other secondary devices, the possible connection media (for example, BLE, Wi-Fi, WFD), available service, connected subnet, and the like.

The primary device may acquire the history information from at least one secondary device and identify the connection state between the detected secondary devices based on the history information. The primary device does not necessarily acquire the history information of all of the detected secondary devices. However, when the primary device can not identify a connection state for a particular secondary device among the detected secondary devices, the primary device may request the history information from another secondary device.

According to an exemplary embodiment, not specifically claimed, depicted in FIG. 1, the primary device 104 is a tablet owned by the user, while detected secondary devices (permanent devices including SD 102a through SD 102n) include a smart TV SD 102a, a laptop SD 102b, a mobile phone SD 102c, a slate SD 102d owned by the user and a robot cleaner SD 102n. However, other SDs that may be present in the area and detected by the primary device 104, including for example a mobile phone SD 102e belonging to a wife of the user, a washing machine SD 102f, a headphone SD 102g, a speaker SD 102h, and so on.

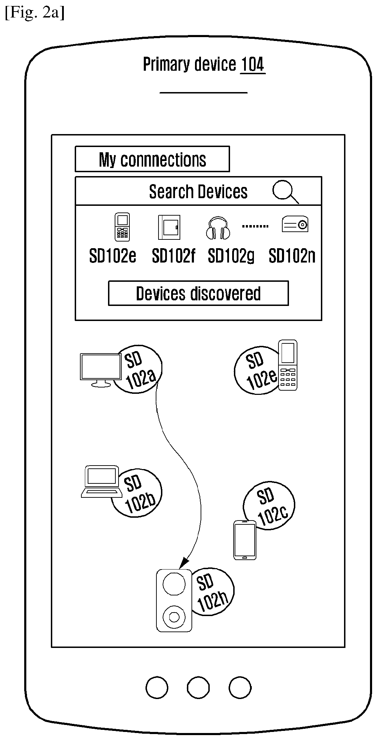

Once the secondary devices SD 102a - SD 102n are detected and published on the interactive UI of the primary device 104 (for example on a display screen), the primary device 104 can be configured to identify one or more secondary devices selected by the user and connect them. Exemplary embodiments including interactive UIs for secondary device selection and connection are explained below in conjunction with FIG. 2A through FIG. 2C.

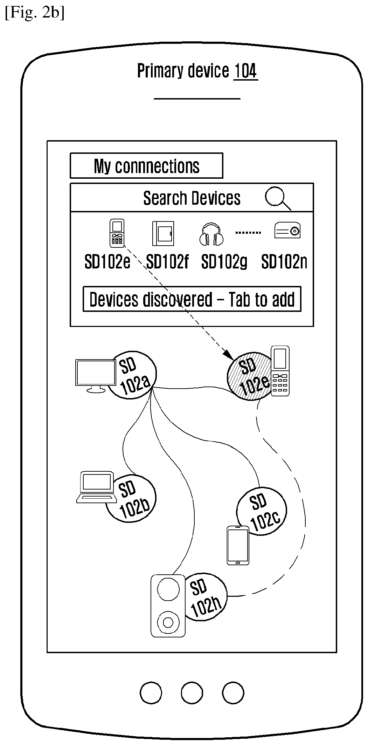

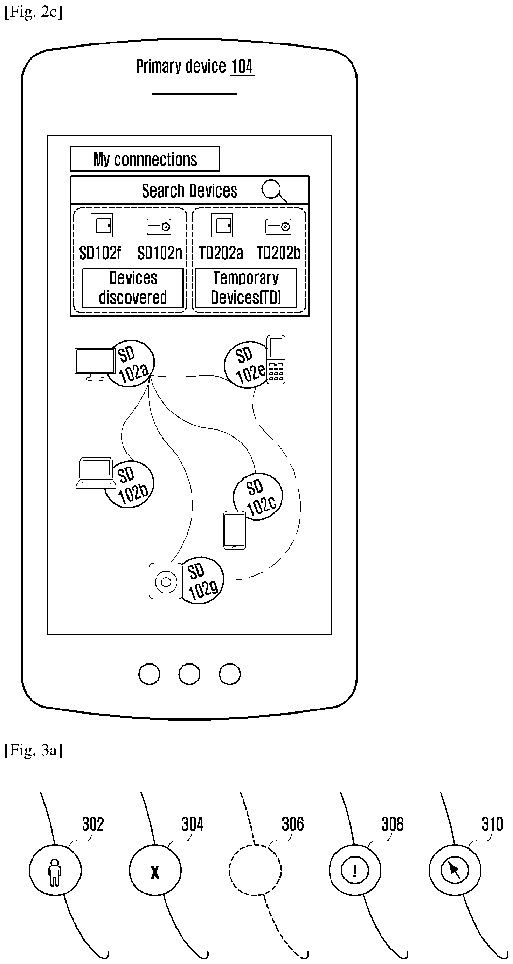

FIG. 2A, FIG. 2B and Fig. 2C illustrate a UI of the primary device 104 enabling device connectivity management, according to exemplary embodiments as disclosed herein.

FIG. 2A depicts the interactive UI, enabling connection among any two SDs from the plurality of SDs (102a through 102n) published on the UI on detection of a drag gesture from any one published SD to other SD. The interactive UI may display a connection state between the plurality of SDs (for example, active connection, inactive connection, connection procedure is pending, or error occurred). An input gesture (second input gesture such as drag) from one secondary device to other secondary device indicates to the primary device that the two SDs such as SD 102a (TV) and SD 102h (speaker) are selected and need to be connected. The drag gesture here can trigger the primary device 104 to initiate connection establishment process among the selected secondary devices (SD 102a and SD 102h) without the need for user to attend each secondary device individually.

The FIG. 2B illustrates a user selecting a secondary device of interest from the published secondary devices, wherein FIG. 2B depicts secondary devices which are registered as permanent devices.

In an exemplary embodiment, not specifically claimed, a gesture mechanism such as a tap gesture may be used to select the secondary device of interest, as depicted herein.

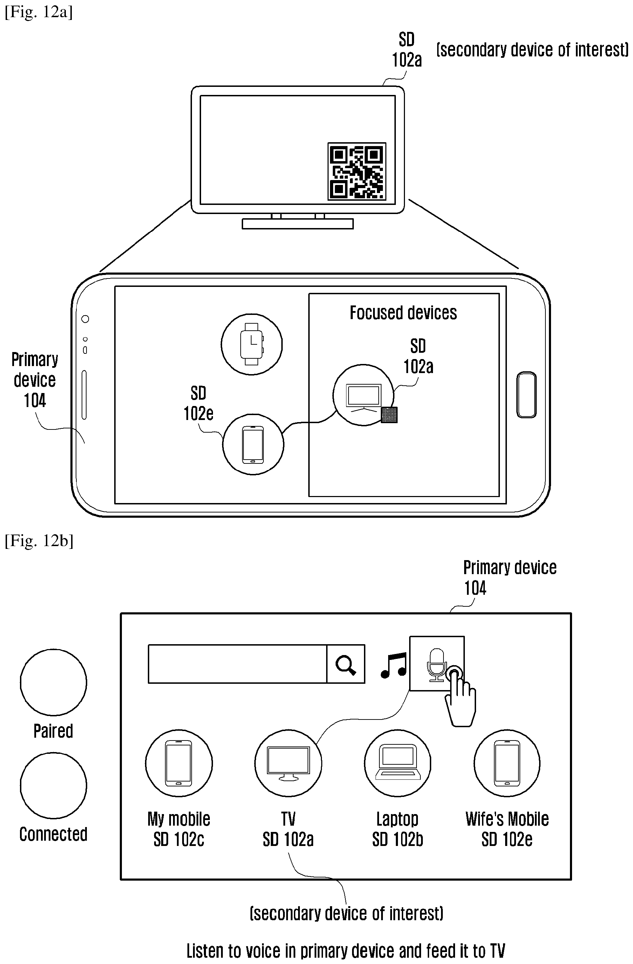

In an exemplary embodiment, not specifically claimed, a device focus mechanism, such as camera assisted detection, may be used to select the secondary device of interest, which is explained further below in conjunction with FIG. 12A

Once the secondary device of interest, such as the smart TV SD 102a is selected by the user, the primary device 104 can be configured to display all currently existing connections of the SD 102a, for example SD 102b, SD 102c and SD 102h. The other secondary devices that may be discovered by the primary device 104 but currently not connected with the secondary device of interest (SD 102a) can be displayed in a separate window, for example termed as discovered devices (here SD 102e, SD 102f, SD 102g ....and SD 102n). One or more of these discovered devices may be added to the SD 102a by tapping on the device of interest, displayed in the discovered devices window. For example here, SD 102e (wife's mobile phone) is added to the connected devices of the SD 102a. Further, without any user intervention, automatically a connection establishment is initiated between SD 102e and SD 102a on an appropriate communication interface identified by the primary device 104.

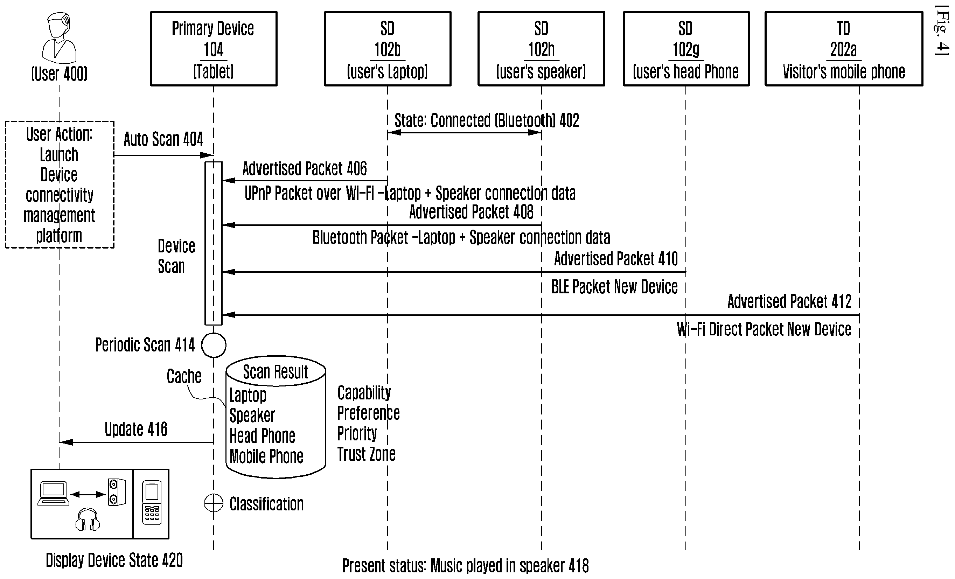

In an exemplary embodiment, not specifically claimed, the user may set the devices of friends or visitors as secondary devices that are registered as temporary devices for receiving services in the multi-device environment 100 for a preset time span. Thus, the example illustrated in FIG. 2C shows detected secondary devices that fall under temporary devices category in a separate window on the UI such as TD 202a and TD 202b. The user, if intends, can tap on the TD 202a or 202b to add them and connect then to the SD 102a. The connection is established by identifying a suitable medium for communication. The connection establishment is explained below in conjunction with sequence diagram of FIG. 4.

FIG. 3A illustrates UI elements of the primary device 104 that represent device state with reference to connections among the plurality of secondary devices (102a to 102n), according to exemplary embodiments as disclosed herein. According to various exemplary embodiments, the processor of the primary device may cause the display to display a connection state between the plurality of secondary devices by using a plurality of connectors. As depicted, the primary device 104 can be configured to display secondary devices connected to the secondary device of interest on the UI with connectors indicating device connection state. The secondary devices that are discovered but disconnected from the secondary device of interest are displayed in a separate window. A second input gesture connects at least one disconnected secondary device to the secondary device of interest. The UI elements (connectors) representing the device connection state or device connection status include a connector 302 indicating connection with user confirmation pending, a connector 304 indicating active connection, a connector 306 indicating an inactive connection, a connector 308 indicating an inactive connection with error, a connector 310 indicating a time bound connection for a temporary device, and the like. Thus, the connectors displayed convey the status of the connection to the user without need to check the settings for the secondary devices, whether permanent devices or temporary devices. A current device connection state between the selected secondary devices can be changed on detection of an input gesture on one or more connectors. Further, the changed device connection state can be updated, and the corresponding connector displayed on the UI can also be updated accordingly to display the updated device connection state.

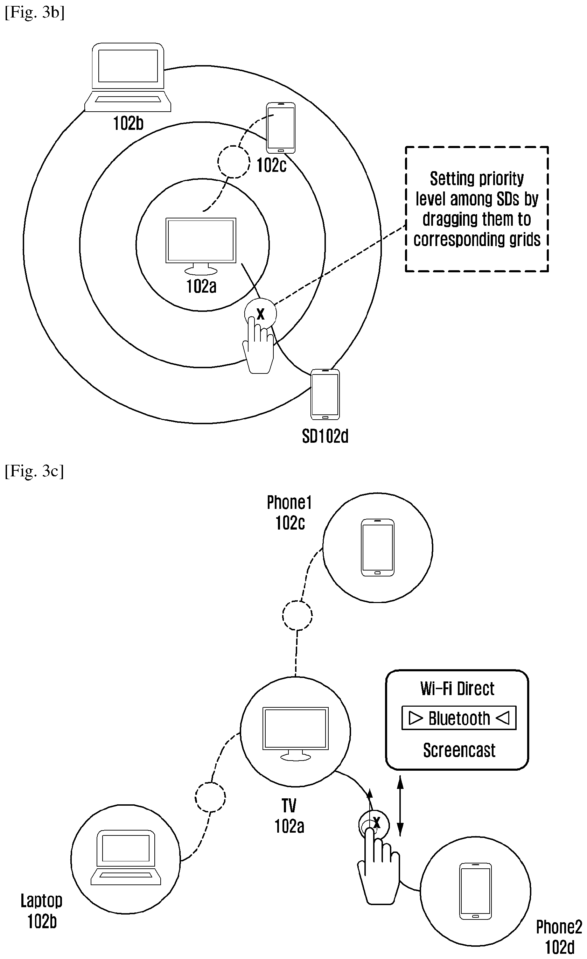

FIG. 3B illustrates UI elements of the primary device 104, including a grid of concentric circles, provided to the user to assign a priority level (device priority status) to selected plurality of secondary devices, according to exemplary embodiments, not specifically claimed, as disclosed herein. According to various exemplary embodiments, the priority level can be a priority level when one secondary device is connected to other secondary devices. For example, one secondary device can initially access a secondary device with a high priority level from among the searched secondary devices. According to various exemplary embodiments, secondary devices of the same type (for example, earphone and speaker) can have the same priority level. In this example, when one secondary device from the plurality of secondary devices with the same priority level is connected, connection with the remaining secondary devices is disconnected. The priority level can be determined by at least one of hop count, ownership of the secondary device, connected AP, space currently located, accessibility (or control authority) of the primary device, number of previous connections, and the like. The primary device 104 can be configured to allow the user to assign the priority level to the selected secondary devices by placing each selected secondary device on a circle among the grid of concentric circles displayed on the UI. Each circle of the grid corresponds to a unique priority level. Thus, here SD 102c, placed on the highest proximity circle with respect to the SD 102a is assigned the highest priority, however currently has an inactive connection with SD 102a, while SD 102d has a second priority but has an active connection. The SD 102b is discovered but not connected to the SD 102a.

FIG. 3C illustrates UI elements of the primary device, providing options to the user to select a communication interface for the selected connection between the selected secondary devices. According to various exemplary embodiments, not specifically claimed, the primary device may present an option for selecting at least one function relating to the connection state between the two secondary devices, in response to detecting an input gesture on a connector of the two secondary devices. For example, the at least one function can include various functions related to the communication with the secondary device, such as the type of the accessed communication interface, channel, communication quality, access duration time, and the like. According to various exemplary embodiments, when two secondary devices are selected from the UI, the primary device identifies at least one available service between the selected secondary devices. In this situation, the available service can include available communication interfaces, type of service, type of network, and the like. In this example, the primary device displays in the UI a list of the at least one available service, and can establish a connection with the secondary devices through one of the services selected from the list. In addition, primary device can establish a connection of the selected secondary devices with one of the at least one available service.

In exemplary embodiments, not specifically claimed, the primary device 104 can provide advanced interaction for granular control. For example, a long press and scroll up/down on a connector can open and switch between different types of connections or communication interfaces between the connected secondary devices SD 102a and SD 102d. For example, user can select a medium for communication interface from available communication interfaces between the SDs, such as Wi-Fi, Bluetooth or Screencast.

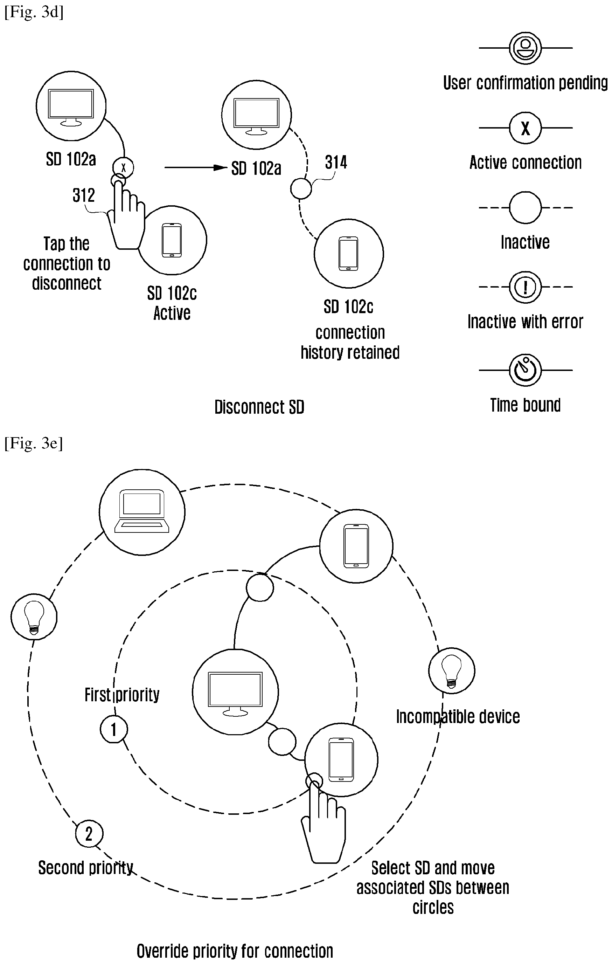

FIGs. 3D and FIG. 3E illustrate device convergence provided by the primary device 104, according to exemplary embodiments as disclosed herein. FIG. 3D depicts a tap gesture performed by the user on the connection between the SD 102a and SD 102c displayed on the interactive UI. Thus, the user is able to control the connection state by simple gesture on the connector. As depicted in the example of FIG. 3D, for a connector that currently displays connected state, a tap gesture 312 performed on the SD 102a can cause the connection between the SD 102a and the SD 102c to be disconnected. Similarly, for SD 102a that currently displays a connection state of paired and not connected, a tap gesture 314 on the connector can cause the connection to be established.

Further, the device connectivity management platform of the primary device 104 retains history information of all previous connections that may be used later for suggesting connection of interest to the user for similar intents. The connection state can be identified by the user based on the connectors displayed in accordance with connectors for connection state described in FIG. 3A.

The FIG. 3E depicts an exemplary embodiment, not specifically claimed, in which the user is allowed to override the device priority status, or priority level, defined by the grid when the user attempts to connect any two SDs. As an example, when multiple SDs are already paired with the primary device 104 after both the SDs are discovered and available for connection, there may be a conflict among the SDs while establishing connection. Thus, here the user can drag and move the priority so that the SDs can be prioritized on-the-fly as desired by the user.

FIG. 4 illustrates an example sequence diagram for discovery and connection establishment of the plurality of secondary devices from the primary device 104, according to exemplary embodiments. According to various exemplary embodiments, the primary device 104 may establish a connection between selected secondary devices. The primary device 104 may transmit a connection request message to each of selected two secondary devices. When the two secondary devices completed the connection process, the two secondary devices can transmit the ACK message to the primary device 104. FIG. 4 depicts a user 400 utilizing the primary device 104 (tablet) that provides a device connectivity management platform for connectivity management among the plurality of secondary devices in the multi-device environment 100. In this example, the primary device 104 detects and publishes secondary devices present in the multi-device environment on the UI of the primary device 104 along with temporary devices, if any, that are registered with the primary device by the user. The secondary devices in the multi-device environment include the SD 102b (user's Laptop), the SD 102h (user's speaker), SD 102g (user's head phone). The temporary device TD 202a can be a visitor's mobile phone that may be included in the multi-device environment 100 and identified as valid device for a pre-defined time span set by the user 400. The user 400 launches the device connectivity management platform on the primary device 104 that initiates an automatic scan 404 to detect the devices in the multi-device environment 100 and publish the detected devices along with their current inter-device connection states. To detect the secondary devices present in the multi-device environment's pre-defined area, the primary device 104 receives advertised packets (packet 406, packet 408, and packet 410) over various communication interfaces from the SD 102b, the SD 102h, the SD 102g and the TD 202a. For example, here the primary device 104 receives UPnP packets over Wi-Fi from the SD 102b, over Bluetooth from SD 102h, over Bluetooth Low Energy (BLE) from the SD 102g and over Wi-Fi Direct from TD 202a. The primary device 104 performs a periodic scan 414 and stores the scan result in a cache. The scan result indicates the laptop SD 102b, speaker SD 102h, head phone SD 102g and visitor's mobile phone TD 202a as detected secondary devices along with their connection parameters such as capability, preference, priority, trust zone, and the like. According to various exemplary embodiments, not specifically claimed, the connection parameters can be included in the advertised packet transmitted from each secondary device, and can be transmitted to the primary device. On detection of the secondary devices, the primary device 104 provides an update 416 to the UI and displays or publishes the updated information on the UI of the primary device with notification to the user 400. Further, based on the information acquired during the device scan the UI displays classification of the devices as connected or disconnected with respect to other secondary devices published on the UI. For example, here present status display 418 indicates that speaker SD 102h already connected with laptop SD 102b with music on SD 102b being played in speaker SD 102h. The UI of the primary device 104 displays device status 420.

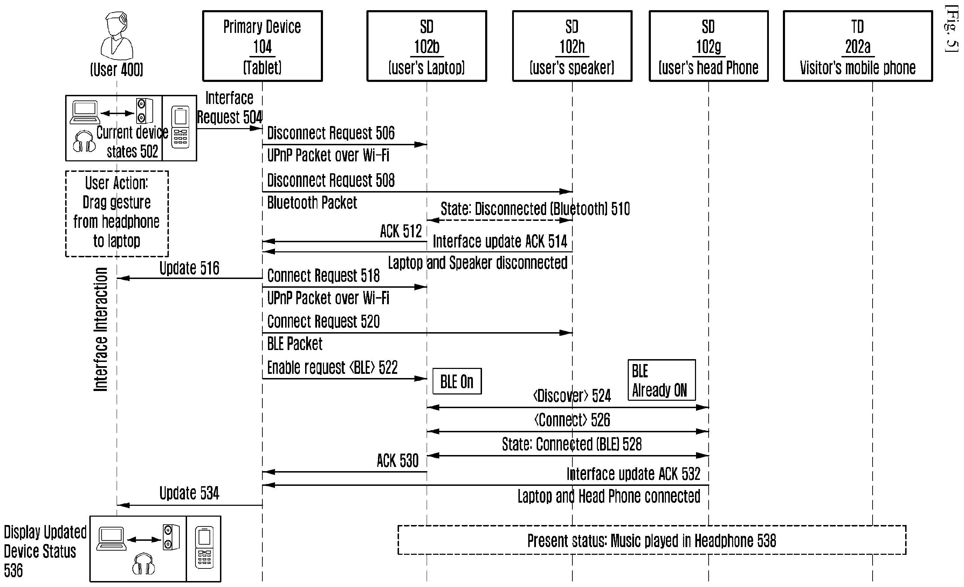

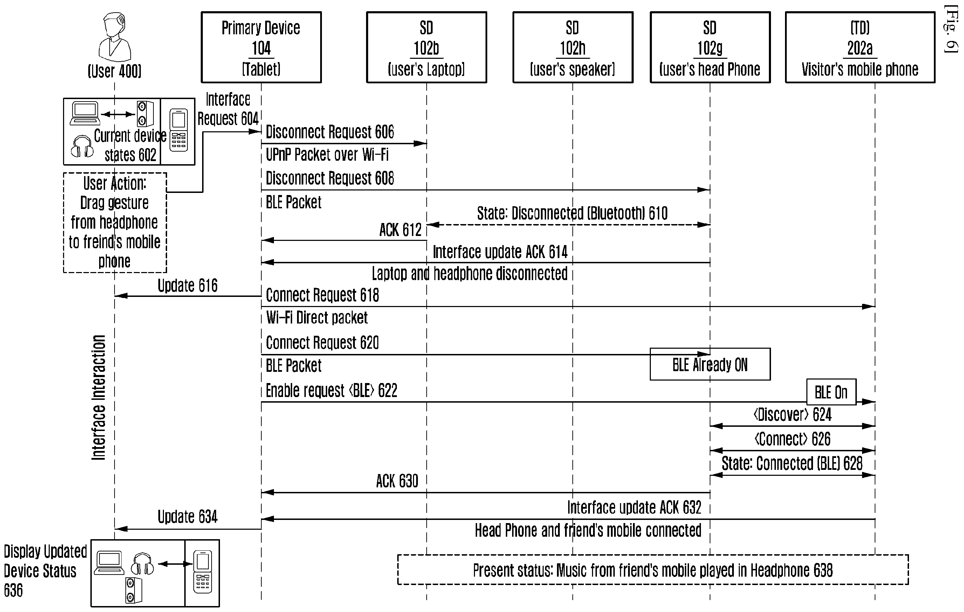

FIG. 5 and FIG. 6 illustrate sequence diagrams describing switching of connections among the plurality of secondary devices from the UI of the primary device 104 for providing services in the multi-device environment 100, according to exemplary embodiments as disclosed herein.

Referring to the multi-device environment 100 described in FIG. 4 and in continuation to device status 420 displayed on the UI, the current device status 502 in FIG. 5 may correspond to device status 420 where, the SD 102b (laptop) and the SD 102h (speaker) are connected. When the user 400 intends to switch between devices in order to listen to the music played on laptop SD 102b on headphone SD 102g, the user performs a drag gesture from SD 102g to SD 102b.

The gesture triggers an interface request 504 in the primary device 104, wherein the device connectivity management platform of the primary device 104 sends disconnect requests 506 and 508 to the SD 102b and the SD 102h. The disconnect request is over UPnP packet over Wi-Fi for SD 102b, and over Bluetooth packet for SD 102h. On receiving the request the SD 102b and SD 102h that were connected over Bluetooth communication interface establish a disconnected state 510. In response, the primary device 104 receives ACK 512 and interface update ACK 514 from the SD 102b and SD 102h that are now disconnected. Further, the disconnected status is provided as an update 516 to the UI of the primary device 104. According to various exemplary embodiments, not specifically claimed, when the primary device 104 selects a connection with a secondary device that has the same priority level as the selected secondary device (for example, user's laptop 102b) and the currently connected secondary device (for example, user's speaker 102h) or with the same type of secondary device (for example, user's head phone 102g), a request is made to automatically release the connection with the previously connected secondary device (for example, user's speaker 102h).

Further, the primary device 104 sends connect requests 518 and 520 to the SD 102b over Wi-Fi and the SD 102g over BLE and then sends enable request 522 to enable configuration of the BLE communication interface on the SD 102b in order to connect over BLE with the SD 102g. Because the BLE interface for the head phone SD 102g is already enabled a discover procedure 524 and a connect procedure 526 is performed between the two secondary devices and SD 102b and the SD 102g to establish a connected state 528 over the BLE. The SD 102b sends ACK 530 and the SD 102g sends interface update ACK 532 to the primary device 104. In response, the primary device 104 provides an update 534 to the UI and displays updated device status 536, with the current status 538 indicating music played in headphone

Referring to the multi-device environment 100 described in FIG. 5 and in continuation to updated device status 536 displayed on UI, the current device status 602 in FIG. 6 may correspond to updated device status 536 where, the SD 102b (laptop) and the SD 102g (headphone) are connected. When the user 400 intends to switch between devices to listen to the music played on visitor's mobile phone TD 202a, on the headphone SD 102g the user performs a drag gesture 602 from SD 102g to TD 202a.

The gesture triggers an interface request 604 in the primary device 104, wherein the device connectivity management platform of the primary device 104 sends a disconnect requests 606 and 608 to the SD 102b and the SD 102g. The disconnect request is over UPnP packet over Wi-Fi for SD 102b while over BLE packet for SD 102g. On receiving the request the SD 102b and SD 102g that were connected over BLE communication interface establish a disconnected status 610. In response, the primary device 104 receives ACK 612 and interface update ACK 614 from the SD 102b and SD 102h that are now disconnected. Further, the disconnected status is provided as an update 616 by the primary device 104 on the UI.

Further, the primary device 104 sends connect requests 618 and 620 to the TD 202a over Wi-Fi Direct and the SD 102g (headphone) over BLE and then sends enable request 622 to enable configuration of BLE communication interface on the TD 202a in order to connect over BLE with the SD 102g. Because the BLE interface for the head phone SD 102g is already enabled a discover procedure 624, and a connect procedure 626 are performed between the two devices, and TD 202a and the SD 102g establish a connected status 628 over the BLE. The SD 102g sends ACK 630 and the TD 202a sends interface update ACK 632 to the primary device 104. In response, the primary device 104 provides an update 634 to the UI and displays updated device status 636 with current status 638 indicating music from visitor's mobile played in headphone.

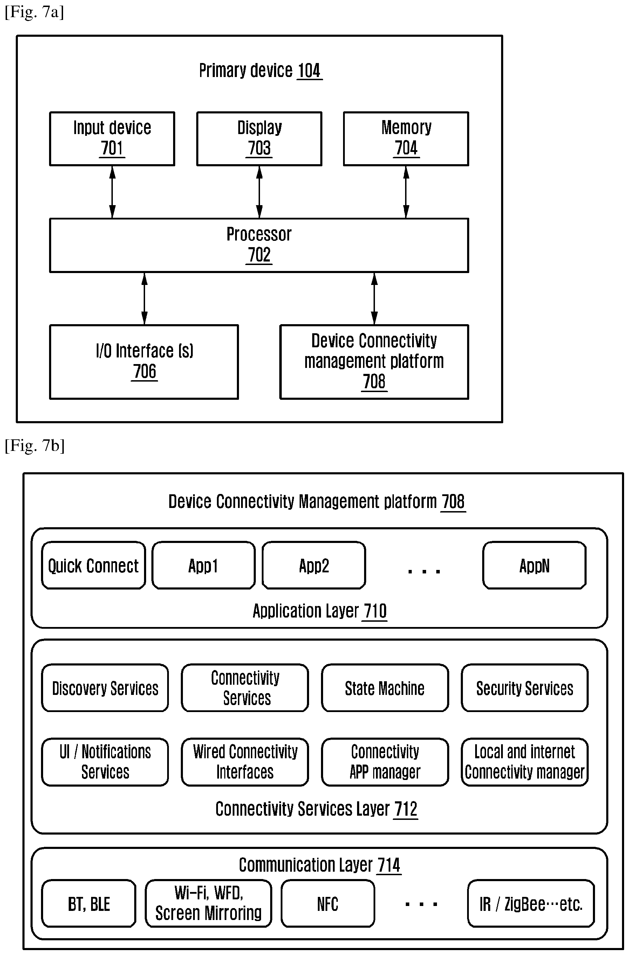

FIG. 7A and 7B illustrate a plurality of components of the primary device 104 implementing the device connectivity management platform, according to the exemplary embodiments.

Referring to figure 7A, the primary device 104 (electronic device) is illustrated in accordance with an exemplary embodiment of the present subject matter. In an exemplary embodiment, not specifically claimed, the primary device 104 may include an input device 701, a processor 702, a display 703, an input/output (I/O) interface 704 (for example a configurable user interface), and a memory module 706. The display 703, for example, can include an LCD, an LED display, an OLED display, or an MEMS display, or an electronic paper display. The display 701 can display the user interface illustrated in FIGs. 2A to 2C. The input device 701, for example, can include a touch panel, a digital pen sensor, keys, or an ultrasonic input device. In exemplary embodiments, the input device 701 acquires the input generated in the user interface displayed in the display 703 and provides the input to the processor 702. The I/O interface 704 may include, for example, a web interface, and a graphical user interface (UI), a communication interface and the like. Further, the communication interface allows the primary device 104 to communicate with other devices such plurality of secondary device 102a to 102n, a plurality of temporary devices such as TD 202a and TD 202b, also referred as plurality of electronic devices. The communication interface also allows communication with a server in a cloud network. Further, the communication interface may also enable communication through cellular networks, Wi-Fi networks, and device to device communication and the like. The memory module 706 maintains the data to be stored during the device connectivity management functions. Further, the primary device 104 includes a device connectivity management platform 708 configured to manage inter-device connectivity among a plurality of secondary devices for services within the multi-device environment 100 as described in conjunction with FIG. 1 through FIG. 6 and FIG. 8 through FIG. 14, not repeated for brevity.

FIG. 7B illustrates a plurality of modular layers within the device connectivity management platform 708 including an application layer 710, a connectivity services layer 712 and a communication layer 714. The application layer includes a plurality of applications of the primary device 104.

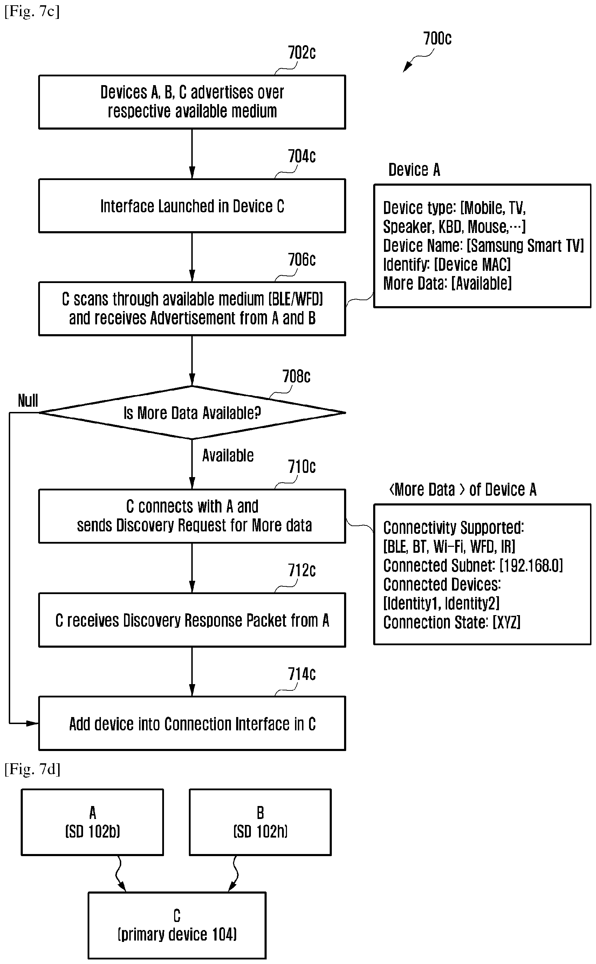

FIGs. 7C through 7E illustrate a method for discovering the plurality of secondary devices by the primary device, according to exemplary embodiments as disclosed herein. FIG. 7C is a flow diagram depicting a method 700c for discovering the plurality of secondary devices (for example herein, Device A corresponding to SD 102b and Device B corresponding to SD 102h) by a Device C (corresponding to primary device 104) in the multi-device environment 100. The Devices A, B, C advertise (operation 702c) over respective available media. Further, when device connectivity management platform 708 of the primary device 104 (Device C) launches (operation 704c) an interactive UI on the Device C, the Device C scans (operation 706c) through available media such as BLE/WFD and receives advertisement from Device A and the Device B. For example, the Device A is discovered with:
Device type: [Mobile, TV, Speaker, KBD, Mouse,...]
Device Name: [Samsung Smart TV]
Identify: [Device MAC]
More Data: [Available]

According to various exemplary embodiments, not specifically claimed, the More Data may include history information relating to a current connection and at least one previous connection with other secondary devices.

Further, the method 700c enables the device connectivity management platform 708 to check whether More Data is available with Device A. Because, in the current example, More Data is available, the method 700c enables the device connectivity management platform 708 to connect (operation 710c) Device C with Device A and send a Discovery Request for More Data, wherein the More Data of Device A includes:
Connectivity Supported: [BLE, BT, Wi-Fi, WFD, IR]
Connected Subnet: [192.168.0]
Connected Devices: [Identity 1, Identity2]
Connection State: [XYZ]

According to another exemplary embodiment, not specifically claimed, More Data can be included in the advertised packets. In this example, primary device 104 can acquire the More Data (for example, history information) from the advertised packets, without establishing a connection with a secondary device.

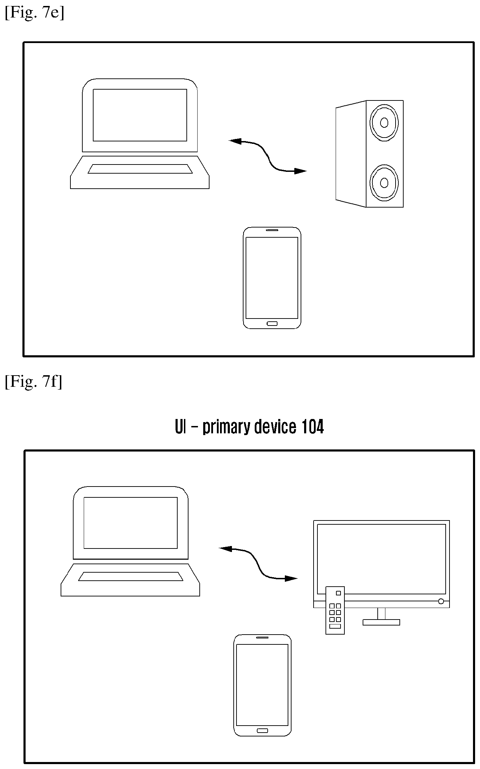

Further, the Device C receives (operation 712c) a Discovery Response Packet from the Device A and adds (operation 714c) or connects the Device A to Device C as shown in FIG. 7D and displays it on the interactive UI as shown in the FIG. 7E. The various operations in the method 700c may be performed in the order presented, in a different order or simultaneously. Further, in some exemplary embodiments, some operations listed in FIG. 7C may be omitted.

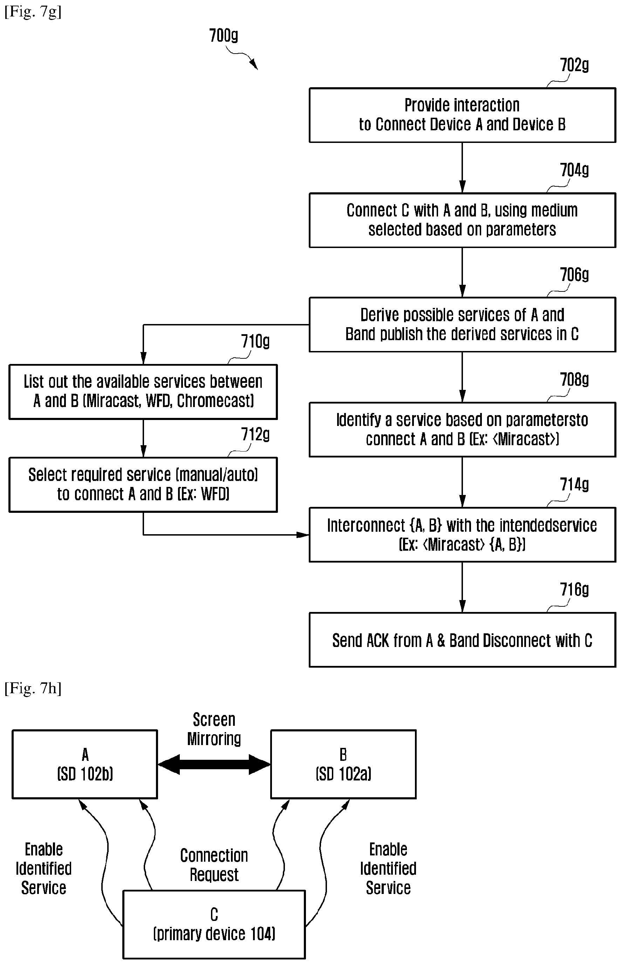

FIGs. 7F through FIG. 7H illustrate a method for connectivity services provided by the primary device to the discovered plurality of secondary devices, according to exemplary embodiments as disclosed herein. FIG. 7G is a flow diagram depicting a method 700g for connecting the plurality of secondary devices (for example herein, Device A corresponding to SD 102b and Device B corresponding to SD 102a) in the multi-device environment 100 on detection of a input gesture such as a drag gesture on the UI of Device C corresponding to primary device 104 as depicted in FIG. 7F. The method 700g allows the device interconnectivity management platform 708 of the primary device 104 (Device C) to provide (operation 702g) interaction gesture (such as drag gesture) to connect the Device A and Device B. Further, the method 700g includes connecting (operation 704g) the Device C with Device A and Device B, using a medium selected based on parameters. Further, the method 700g includes deriving (operation 706g) possible services of the Device A and the Device B and publishing the derived services on the UI of the Device C. Further, the method 700g includes identifying (operation 708g) a service based on parameters to connect the Device A and the Device B (for example Miracast). Simultaneously, the method 700g includes listing (operation 710g) the available services between the Device A and the Device B (Miracast, WFD, Chromecast) and selecting (operation 712g) a required service (manual/auto) to connect the Device A and the Device B (for example WFD). Further, the method 700g includes interconnecting (operation 714g) Device A and Device B with the intended service and sending an ACK from the Device A and the Device B and disconnecting from the Device C (operation 716g) as shown in more detail in FIG. 7H.

The various operations in the method 700g may be performed in the order presented, in a different order or simultaneously. Further, in some exemplary embodiments, some operations listed in FIG. 7G may be omitted.

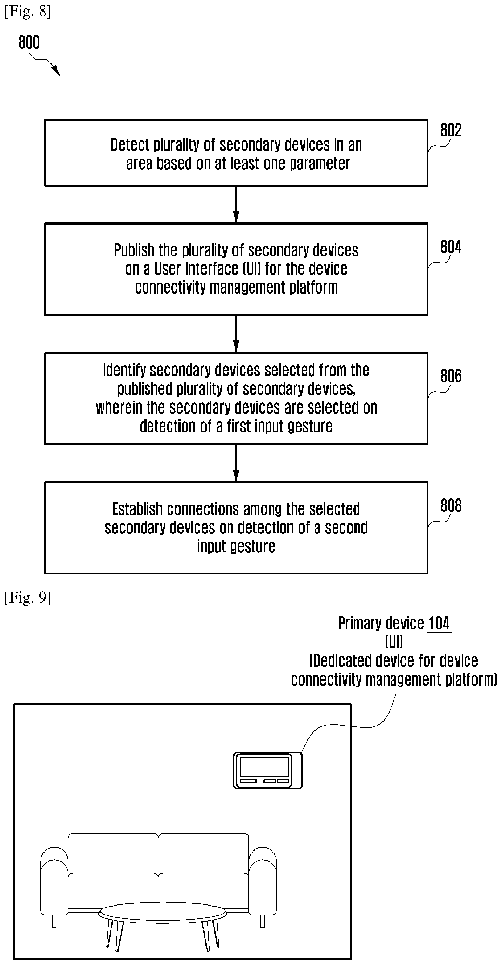

FIG. 8 is a flow diagram illustrating a method 800 of providing the device connectivity management platform for managing device connectivity in the multi-device environment 100, according to exemplary embodiments.

At operation 802, the method 800 includes allowing the device connectivity management platform 708 to detect the plurality of secondary devices (including for example secondary device SD 102a through SD 102n or temporary devices added by the user for pre-set time span) in an area (the pre-defined area defined by coverage of an AP, a femto-cell or the like) based on at least one parameter. The detection of the secondary devices may be based on the parameters such as connected devices such as devices connected to single or known Access Point (AP), a same account or the like, that may be discoverable through one or more available communication interfaces such as the BLE, Wi-Fi HaLow, BLE, Wi-Fi, Oxygen MESH, or the like. At operation 804, the method 800 includes allowing the device connectivity management platform 708 to publish the plurality of secondary devices on the UI provided for the device connectivity management platform 708 on the primary device 104. At operation 806, the method 800 includes allowing the device connectivity management platform 708 to identify the secondary devices selected from the published plurality of secondary devices, wherein the secondary devices are selected on detection of the input gesture (for example a first input gesture such as a tap gesture). At operation 808, the method 800 includes allowing the device connectivity management platform 708 to establish connections among the selected secondary devices on detection of the input gesture (for example a second input gesture such as a drag gesture). At operation 808, when secondary devices that are not currently connected to each other are selected at operation 806, the primary device may disestablish the connection of the selected secondary devices.

The connection establishment includes identifying a suitable medium from a plurality of media available for establishing the connection between the selected secondary devices. Further, requesting the selected secondary devices to enable the identified medium by configuring the medium at each selected secondary device end. Thereafter, initiating a discovery and connection establishment procedure between the selected secondary devices to establish the connection and displaying status of the connection among the selected secondary devices on the UI. An example of a connection establishment procedure is explained above in conjunction with sequence diagram of FIG. 4.

In an exemplary embodiment, not specifically claimed, the method 800 includes allowing the device connectivity management platform 708 to assign the priority level to the selected secondary devices by placing each selected secondary device on a circle among concentric circles displayed on the UI, wherein each circle corresponds to a unique priority level. An example of a priority assignment is explained above in conjunction with FIG. 3B.

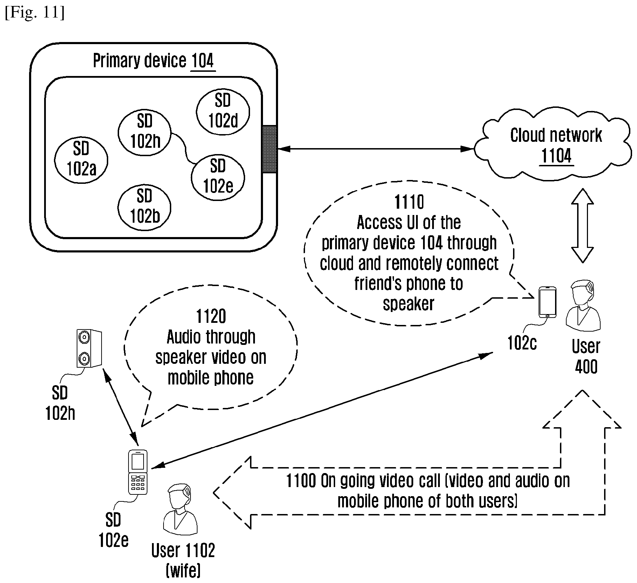

In an exemplary embodiment, not specifically claimed, the method 800 includes allowing the device connectivity management platform 708 to enable access of the UI and the device connectivity management platform 708 through the cloud network to remotely select the secondary devices and establish the connection among the selected secondary devices. An example of remote access to the device management platform is explained below in conjunction with FIG. 11. Further, the method 800 includes allowing the device connectivity management platform 708 to identify a secondary device of interest among the plurality of secondary devices using a gesture, wherein secondary devices connected to the secondary device of interest are displayed on the UI with connectors indicating device connection state. Further, the secondary devices that are discovered but disconnected from the secondary device of interest are displayed in a separate window, wherein a second input gesture connects at least one disconnected secondary device to the secondary device of interest.

In an exemplary embodiment, not specifically claimed, the method 800 includes allowing the device connectivity management platform 708 to provide commands for execution of at least one action by the secondary device of interest through an interactive UI element (for example a microphone) of the device connectivity management platform 708. The interactive UI element is activated for the secondary device of interest on detecting a third input gesture on the UI, an example of which is explained below in conjunction with FIG. 12B.

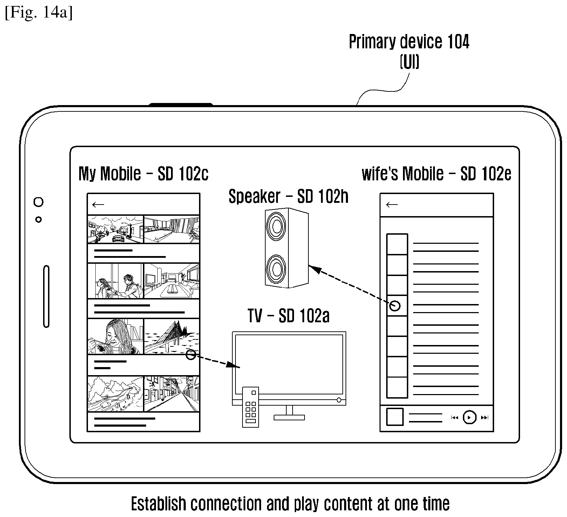

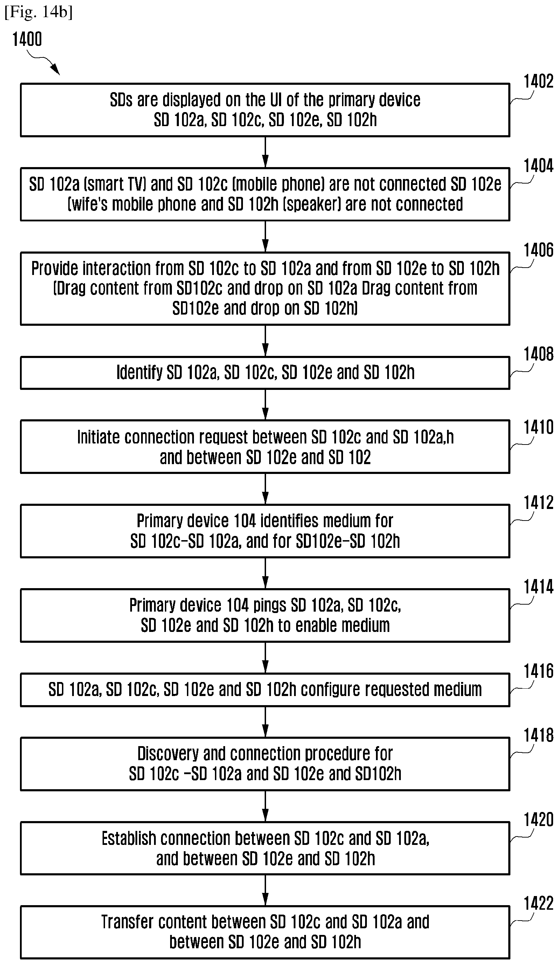

Further, the method 800 includes allowing the device connectivity management platform 708 to display contents of the selected secondary devices on the UI of the primary device 104. Further, the content of a first secondary device is dragged and dropped on a second secondary device to initiate connection establishment and content transfer between the first secondary device and the second secondary device, an example of which is explained below in conjunction with FIG. 14

Further, the method 800 includes allowing the device connectivity management platform 708 to detect and add a secondary device of interest to the plurality of secondary devices detected by the device connectivity management platform 708 using the device focus mechanism, an example of which is explained below in conjunction with FIG. 12B.

The various operations in method 800 may be performed in the order presented, in a different order or simultaneously. Further, in some exemplary embodiments, some operations listed in FIG. 8 may be omitted.

FIG. 9 illustrates device connectivity management platform 708 implemented on primary device 104 when the primary device 104 is dedicated for device connectivity management functions, according to exemplary embodiments as disclosed herein. For example, the dedicated primary device 104 can be a standalone accessory installed in the house, which can be accessed by one or more authorized users for managing device connectivity among the plurality of secondary devices in the multi-device environment at the user's home. Various exemplary embodiments of the present subject matter are not limited to the type illustrated in FIG. 9. For example, the device connectivity management platform 708 can be realized in various types of primary devices, including smartphones, tablet PCs, mobile telephones, video telephones, electronic book readers, desktop PCs, laptop PCs, netbook computers, work stations, servers, PDAs, PMPs (portable multimedia player), MP3 players, medical devices, cameras, and wearable devices.

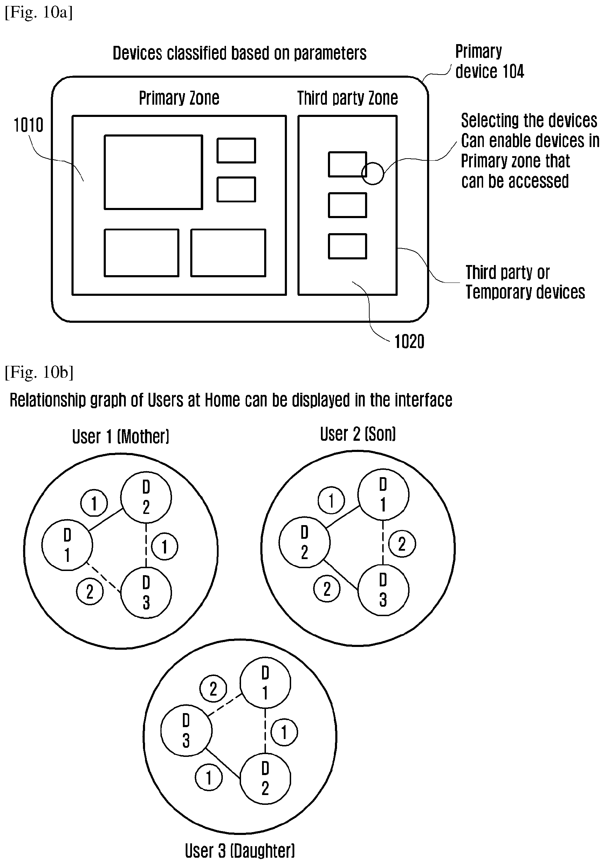

FIG. 10A and FIG. 10B illustrate UI with the plurality of secondary devices displayed after classifying the secondary devices based on one or more criteria, according to exemplary embodiments as disclosed herein. FIG. 10A depicts detected permanent secondary devices displayed in a primary zone 1010 while detected temporary devices displayed in secondary zone 1020 on the UI of the primary device 104. A gesture such as tap gesture can select the temporary devices and shift them into primary zone 1010.

FIG. 10B depicts a UI of the primary device 104 that can display relationship graphs of all users at home on the UI of the primary device 104. The figure depicts, for example, how User 1, User 2 and User 3 are connected to each other, wherein each relationship graph displayed on the primary device 104 represents a corresponding user. Further, the relationship graph also depicts that the priority of other connected devices for every user is different. Hence, based on a priority of devices with respect to a particular user's device, the relationship graph can be represented in a different manner.

FIG. 11 illustrates accessing of the device connectivity management platform of the primary device 104 through a cloud network 1104 for remotely managing connectivity among the plurality of secondary devices, according to exemplary embodiments. As depicted in the example of FIG. 11, when the user 400 is away from home (which can be multi-device environment 100) with the user's mobile phone SD 102c, the user is provided access to the primary device 104 and can effectively access the device connectivity management platform 708 to remotely manage device connectivity among one or more secondary devices at home. As an example, the user 400 may be busy on a video call with his wife, user 1102, corresponding to communication between SD 102c and SD 102e. However, if user 400 or his wife, user 1102, intends to switch the audio of the call to a speaker, the user 400 can do so by accessing the UI of the primary device 104 through the cloud network 1104. Thus, the user 400 can remotely perform device connectivity management without need for his wife, user 1102, to worry about operating the primary device 104.

FIG. 12A illustrates detecting and adding a secondary device of interest to the plurality of secondary devices using a device focus mechanism, according to exemplary embodiments as disclosed herein. As depicted, the SD 102a, if not included in the list of detected SDs can be added using the device focus mechanism, wherein a camera interface on the primary device 104 can be focused on the secondary device of interest 102a. The primary device 104 can correctly identify the SD 102a as a smart TV based on a QR code or image recognition techniques.

Once added, the secondary device of interest SD 102a can be connected to another secondary device SD 102c by an automatically triggered connection establishment, or using a drag gesture between SD 102a and SD 102e.

FIG. 12B illustrates providing voice commands through a microphone of the primary device 104 for execution of at least one action by the secondary device of interest, according to exemplary embodiments. As depicted, a third input gesture, such as dragging of a UI element such as a microphone icon on the primary device 104 and dropping it onto the secondary device of interest, for example SD 102a, selected by the user enables providing instruction to SD 102a through voice commands from the microphone of the primary device 104 for management of device connectivity among the SDs.

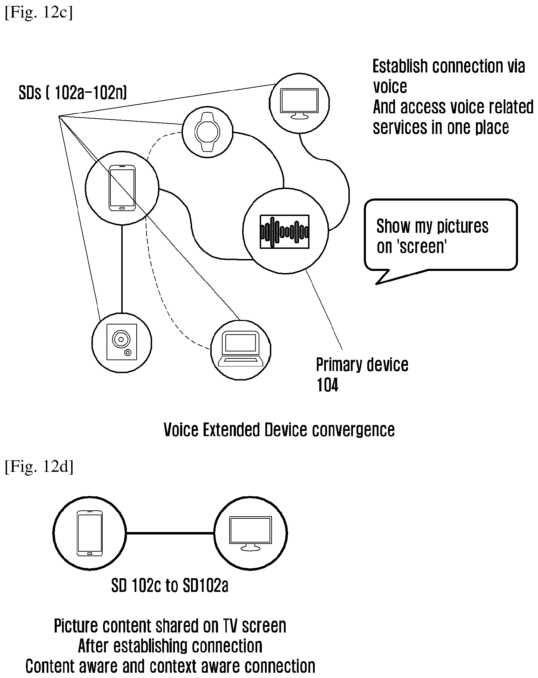

FIG. 12C and FIG. 12D illustrates exemplary embodiments in which the primary device provides voice extended device convergence for the interconnected plurality of secondary devices, according to exemplary embodiments. As depicted in FIG. 12C, a voice input query is provided by the user in the primary device 104. The voice input query is interpreted by the device connectivity management platform 708 of the primary device 104 based on parameters, establishes corresponding connection, and processes voice input query on the SD 102c. Thus, using voice command the user is able to view contents of SD 102c (mobile phone) on the SD 102a (Smart TV).

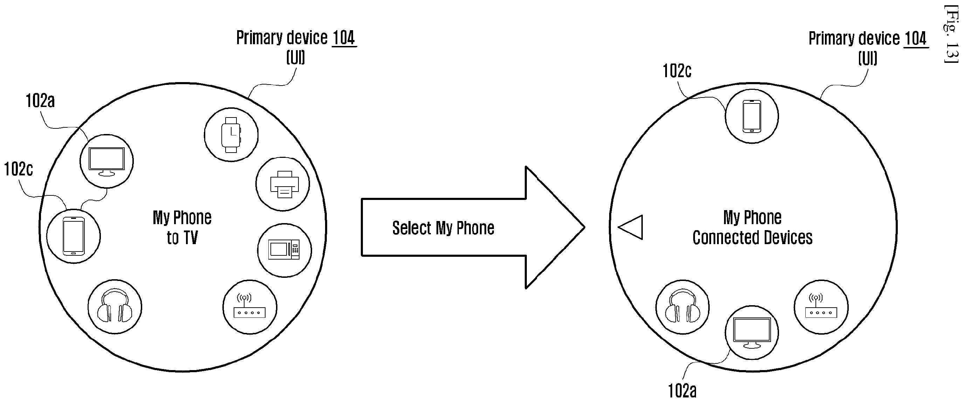

FIG. 13 illustrates an exemplary embodiment, not specifically claimed, including implementation of the device connectivity management platform 708 on a smart watch, which functions as the primary device 104, according to exemplary embodiments. As depicted, the primary device 104 publishes all detected SDs. A drag gesture between an icon representing SD 102c (phone)and an icon representing SD 102a (TV) establishes connection between them. Further, when the SD 102c (phone) is selected as an SD of interest, the primary device 104 displays all existing connections of the SD 102 (phone) with other published SDs.

FIG. 14A illustrates an interactive UI of the primary device 104 and FIG. 14B illustrates operations performed by the device connectivity management platform 708 for enabling playing of audio/video content from one secondary device on a second secondary device with control commands performed at the UI of the primary device 104, according to exemplary embodiments. FIG. 14A depicts the UI of the primary device 104, publishing SD 102a, SD 102h, SD 102c, SD 102e on the UI. Current screen contents of SD 102c and SD 102e are also displayed. Thus a user can perform a drag gesture dragging a content of interest, such as a video from SD 102c or SD 102e to another SD, for example SD 102a or SD 102h. According to an exemplary embodiment, not specifically claimed, this automatically establishes a connection between the selected SDs, initiates screening of contents from selected SD to other selected SDs, as explained below in an example method 1400 of the FIG. 14B.

According to an exemplary embodiment, not specifically claimed, as illustrated in FIG. 14B, SDs are displayed (operation 1402) on the UI of the primary device, including SD 102a, SD 102c, SD 102e and SD 102h. Initially, the SD 102a (smart TV) and the SD 102c (mobile phone) are not connected (operation 1404). Similarly, the SD 102e (wife's mobile phone) and the SD 102h (speaker) are not connected. The device management platform 708 of the primary device 104 can be configured to provide (operation 1406) interaction from the SD 102c to the SD 102a and from the SD 102e to the SD 102h by detecting dragging of content from the SD 102c and dropping on the SD 102a. Similarly, dragging content from the SD 102e and dropping on the SD 102h. Further, The device management platform 708 of can be configured to identify (operation 1408) the SDs (SD 102a, SD 102c, SD 102e and SD 102h) and initiate (operation 1410) a connection request between the identified SDs (SD 102c to SD 102a, SD 102e to SD 102h). Further, the device management platform 708 can be configured to identify (operation 1412) the medium for the connection between the identified SDs (SD 102c to SD 102a, SD 102e to SD 102h) and ping (operation 1414) the identified SDs for enabling the medium. Further, once the SDs are configured (operation 1416) for the requested medium, the device management platform 708 can be configured to establish (operation 1418) discovery and connection procedure between SD 102c and SD 102a, and between SD 102e and SD 102h. Further, the device management platform 708 can be configured to establish (operation 1420) connection between the SDs (SD 102c to SD 102a, and SD 102e to SD 102h) and transfer (operation 1422) selected video content (for example, a video clip) between SD 102c and SD 102a. and a selected audio content (for example, a song) between SD 102e and SD 102h.

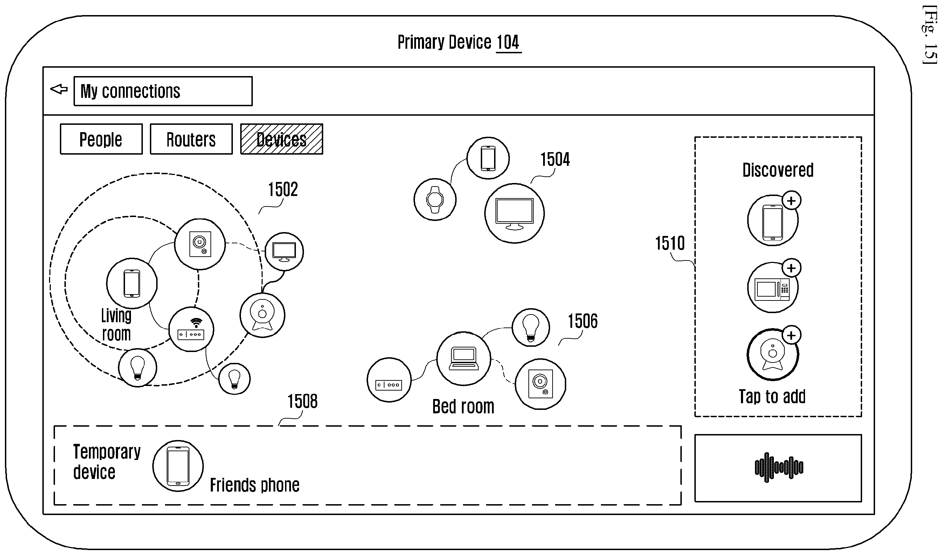

FIG. 15 illustrates an exemplary embodiment not specifically claimed, in which the primary device 104 classifies an interconnected plurality of secondary devices into one or more subsets, and displays the subsets on the interactive UI. As depicted in FIG. 15, the primary device 104 displays the interconnection between the SDs, wherein the device connectivity management platform represents the SDs by classifying the connected SDs into one or more subsets such as a subset 1502, a subset 1504 and a subset 1506. The SDs belonging to a subset are related with a predefined parameter, for example herein, the subsets 1502, 1504 and 1506 display SDs classified based on spaces at home. Thus, subset 1502 displays SDs and their interconnection in a living room, subset 1506 displays SDs and their interconnection in a bed room, and so on. The device connectivity management platform 708 also displays a subset 1508 with current temporary devices in the multi-device environment 100. For example, when a friend is visiting the home, and when the friend's device is connected to Wi-Fi Access Point (AP) or other SDs, it can be displayed separately as the subset 1508. Further, any additional discovered devices can be displayed separately as subset 1510.

Further, the UI also displays a voice icon, through which voice commands can be executed in the primary device 104 or SDs displayed on the UI. A voice control can be a command to initiate connection among SDs or command to execute operations in the connected SDs. The voice control can also be a query to fetch content from current / connected SDs.

Table 1 below depicts a manner in which device connectivity management platform 708 can be configured to classify or form subset with 2 levels.

**Table 1:**

| **Parameters to define levels** | Hop/Link | Ownership (Contact) | Selection | Channel-izing | Device <>User Mapping | AP | Spaces At home | Accessibil-ity | Other-Prio rity | Other - Parameters |
|---|---|---|---|---|---|---|---|---|---|---|
| Level 1 | Hop / Direct Link | My device | User moves and prioritize in UX (Order of devices) | Listening to the port (Only listen to first device) | User1 priority (mobile TV Tab) User2 priority (Washing machine Refrigera tor oven) | Wifi AP Router | Proximi ty of devices (Device priority at home) | Home | | Proximity |
| | | | | | | | | | | Most/Frequently/ Recently used devices |
| Level 2 | 2 hop/ Indirect Link | Third party (Friend's) device | | Block Secondary devices | | Wifi Share Hotspot Tether Extender | | Remote (cloud) | | No. of services |
| | | | | | | | | | | No. of connections |
| Comments | Connect ivity status | SSO (Account), Whitelist, AP, Device Name/ID (Contact) | User drags friends device and set priority | Priority of devices for the current device | User's priority on devices differ | Group owner | Hall, Kitchen, office room etc. | How are the devices accessed | | Mobility status |
| | | | | | | | | | | Device capability |
| | | | | | | | | | | Device status |

The priority level can also be determined by number of previous connections, in addition to the above examples. For example, if secondary device 102a is more frequently connected to secondary device 102c rather than secondary device 102b, , the priority level of secondary device 102a regarding secondary device 102c is higher than the priority level regarding secondary device 102b. In addition, the priority level for the most recently connected secondary device can be higher than the above priority level. Furthermore, the priority level can be determined based on the type of the secondary device.

The priority assigned to the SDs differs with each SD. Table 2 below depicts capturing a priority of each SD with respect to each other SD.

**Table2:**

| Current Device | Level 1 | Level 2 | Level 3 | Level 4 |
|---|---|---|---|---|
| Smart phone | Smart watch Fit Gears | Tab Laptop | Smart TV Speaker Player Home entertainment | Washing Machine Refrigerator Oven and other home needs |
| Sensor Priority | | | | |

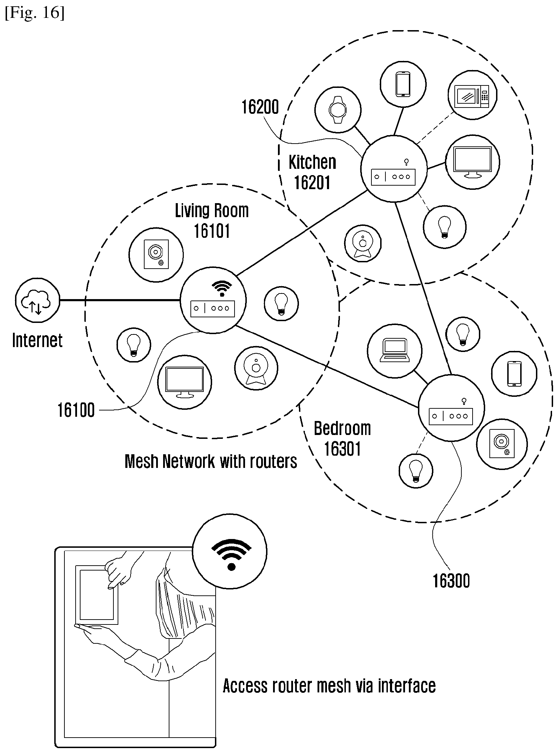

FIG. 16 illustrates an example wherein the primary device 104 provides seamless continuity with a mesh network, according to exemplary embodiments. The. FIG. 16 depicts the interactive UI of the primary device 104 for enabling the user to quickly configure elements of the mesh network such as routers and their connections. Further, allows time bound and temporary connections among visible SDs and enables sharing access and connectivity to friends. The figure depicts multiple APs available at home. Multiple APs connected to multiple modem or single modem. As shown in FIG. 16, AP 16100 is available in a living room 16101, AP 16200 is available in a kitchen 16201 and AP 16300 is available in a bedroom 16301 respectively, wherein some SDs are connected to each of the APs. Thus, based on the AP connection, the SDs can be classified and can be listed on the UI of the primary device 104.

Further, the user can move or drag the SDs from one AP to another AP. For example, dragging a first SD in a first AP to a second AP. Also, establishing connections among SDs connected to different APs are also possible.

The exemplary embodiments disclosed herein can be implemented through at least one software program running on at least one hardware device and performing network management functions to control the network elements. The network elements shown in FIG. 1 through FIG. 16 include blocks which can be at least one of a hardware device, or a combination of hardware device and software module.

The foregoing description of the specific exemplary embodiments will so fully reveal the general nature of the exemplary embodiments herein that others can, by applying current knowledge, readily modify and/or adapt for various applications such specific exemplary embodiments without departing from the generic concept. It is to be understood that the phraseology or terminology employed herein is for the purpose of description and not of limitation. Therefore, while particular exemplary embodiments have been described herein, those skilled in the art will recognize that the exemplary embodiments herein can be practiced with modification within the scope of the exemplary embodiments as described herein.

## Claims

1. A method for managing device connectivity between a plurality of secondary devices (102a-n), by a primary device (104), the method comprising:
detecting all of the secondary devices (102a-n) within a predefined area,
acquiring history information from at least one secondary device of the plurality of secondary devices (102a-n), the history information including information relating to a current connection and at least one previous connection among the plurality of secondary devices (102a-n);
identifying a plurality of connection states between the plurality of secondary devices (102a-n) based on the history information;
displaying the plurality of secondary devices (102a-n) and the plurality of connection states between the plurality of secondary devices (102a-n); and
in response to receiving an input for two secondary devices of the displayed plurality of secondary devices (102a-n), identifying at least one available service between the two secondary devices (102a-n), and changing a connection status or state between the two secondary devices (102a-n) based on the at least one available service.

2. The method as claimed in claim 1, wherein the acquiring of the history information comprises:
receiving advertised packets from the at least one secondary device periodically;
determining that additional data is available from the at least one secondary device;
establishing a connection between the primary device (104) and the at least one secondary device;
receiving the additional data from the at least one secondary device; and
acquiring the history information from the additional data.

3. The method as claimed in claim 1, further comprising:
identifying whether the primary device (104) has an authority to control connections corresponding to each of the plurality of secondary devices (102a-n),
wherein the displaying of the plurality of secondary devices (102a-n) comprises displaying a secondary device for which the primary device (104) has the authority.

4. The method as claimed in claim 1, further comprising:
identifying a plurality of priority levels corresponding to the plurality of secondary devices (102a-n) in relation to the at least one secondary device,
wherein the displaying of the plurality of secondary devices (102a-n) comprises classifying the plurality of secondary devices (102a-n) according to the plurality of priority levels, and displaying the plurality of secondary devices (102a-n) according to the plurality of priority levels.

5. The method as claimed in claim 4, wherein the plurality of priority levels are determined based on at least one from among hop count, ownership of the plurality of secondary devices, access points corresponding to the plurality of secondary devices, locations of the plurality of secondary devices (102a-n), accessibility of the primary device (104), and number of previous connections.

6. The method as claimed in claim 1, wherein the changing the connection status or state comprises:
identifying a service available from the two secondary devices; and
changing the connection status or state between the two secondary devices using the service.

7. An electronic device (104) comprising:
a display (703);
a transceiver; and
a processor (702) configured to manage device connectivity between a plurality of secondary devices (102a-n):
detect all secondary devices (102a-n) within a predefined area,
acquire history information from at least one secondary device of the plurality of secondary devices (102a-n), the history information including information relating to a current connection and at least one previous connection among the plurality of secondary devices (102a-n);
identify a plurality of connection states between the plurality of secondary devices (102a-n) based on the history information;
control the display (703) to display the plurality of secondary devices (102a-n) and the plurality of connection states between the secondary devices; and
in response to receiving an input for two secondary devices of the displayed plurality of secondary devices, control to identify at least one available service between the two secondary devices (102a-n), and change a connection status or state between the two secondary devices (102a-n) based on the at least one available service.

8. The electronic device (104) as claimed in claim 7, wherein the processor (702) is further configured to:
receive advertised packets from the at least one secondary device periodically by the transceiver;
determine that additional data is available from the at least one secondary device;
establish a connection between the electronic device (104) and the at least one secondary device;
receive the additional data from the at least one secondary device by the transceiver; and
acquire the history information from the additional data.

9. The electronic device (104) as claimed in claim 7, wherein the processor (702) is further configured to:
identify whether the electronic device (104) has an authority to control connections corresponding to each of the plurality of secondary devices (102a-n), and
control the display (703) to display a secondary device for which the electronic device (104) has the authority.

10. The electronic device (104) as claimed in claim 7, wherein the processor (702) is further configured to:
identify a plurality of priority levels corresponding to the plurality of secondary devices (102a-n) in relation to the at least one secondary device;
classify the plurality of secondary devices (102a-n) according to the plurality of priority levels; and
control the display (703) to display the plurality of secondary devices (102a-n) according to the plurality of priority levels.

11. The electronic device (104) as claimed in claim 10, wherein the plurality of priority levels (102a-n) are determined based on at least one from among hop count, ownership of the plurality of secondary devices, access points corresponding to the plurality of secondary devices, locations of the plurality of secondary devices, accessibility of the primary device, and number of previous connections.

12. The electronic device (104) as claimed in claim 10, wherein the two secondary devices comprise a first secondary device and a second secondary device, and
if the first secondary device is connected with a third secondary device of the plurality of secondary devices and the third secondary device has a same priority level as the second secondary device, the processor is further configured to:
control to disestablish a connection between the first secondary device and the third secondary device, and
establish the connection between the two secondary devices.

13. The electronic device (104) as claimed in claim 7, wherein the processor (702) is further configured to:
identify a service available from the two secondary devices; and
change the connection status or state between the two secondary devices using the service.

14. The electronic device (104) as claimed in claim 7, wherein the processor is further configured to:
control the display (703) to display a list of services, the list including the service; and
change the connection between the two secondary devices based on the service selected from the list.

15. The electronic device (104) as claimed in claim 7, wherein the processor is further configured to: update the displayed plurality of connection states when the connection status or state of the two secondary devices is changed.

## Patentansprüche

1. Verfahren zum Verwalten der Vorrichtungskonnektivität zwischen mehreren sekundären Vorrichtungen (102a-n) durch eine primäre Vorrichtung (104), wobei das Verfahren Folgendes umfasst:
Erkennen aller sekundären Vorrichtungen (102a-n) innerhalb eines vordefinierten Bereichs,
Erfassen von Verlaufsinformationen von mindestens einer sekundären Vorrichtung der mehreren sekundären Vorrichtungen (102a-n), wobei die Verlaufsinformationen Informationen in Bezug auf eine aktuelle Verbindung und mindestens eine vorherige Verbindung aus den mehreren sekundären Vorrichtungen (102a-n) enthalten;
Identifizieren mehrerer Verbindungszustände zwischen den mehreren sekundären Vorrichtungen (102a-n) basierend auf den Verlaufsinformationen;
Anzeigen der mehreren sekundären Vorrichtungen (102a-n) und der mehreren Verbindungszustände zwischen den mehreren sekundären Vorrichtungen (102a-n); und
als Antwort auf das Empfangen einer Eingabe für zwei sekundäre Vorrichtungen der angezeigten mehreren sekundären Vorrichtungen (102a-n), Identifizieren mindestens eines verfügbaren Dienstes zwischen den beiden sekundären Vorrichtungen (102a-n) und Ändern eines Verbindungsstatus oder -zustands zwischen den beiden sekundären Vorrichtungen (102a-n) basierend auf dem mindestens einen verfügbaren Dienst.

2. Verfahren nach Anspruch 1, wobei das Erfassen der Verlaufsinformationen Folgendes umfasst:
periodisches Empfangen angekündigter Pakete von der mindestens einen sekundären Vorrichtung;
Bestimmen, dass zusätzliche Daten von der mindestens einen sekundären Vorrichtung verfügbar sind;
Herstellen einer Verbindung zwischen der primären Vorrichtung (104) und der mindestens einen sekundären Vorrichtung;
Empfangen der zusätzlichen Daten von der mindestens einen sekundären Vorrichtung; und
Erfassen der Verlaufsinformationen aus den zusätzlichen Daten.

3. Verfahren nach Anspruch 1, welches ferner Folgendes umfasst:
Identifizieren, ob die primäre Vorrichtung (104) eine Berechtigung zum Steuern von Verbindungen hat, die jeder der mehreren sekundären Vorrichtungen (102a-n) entsprechen,
wobei das Anzeigen der mehreren sekundären Vorrichtungen (102a-n) das Anzeigen einer sekundären Vorrichtung umfasst, für welche die primäre Vorrichtung (104) die Berechtigung hat.

4. Verfahren nach Anspruch 1, welches ferner Folgendes umfasst:
Identifizieren mehrerer Prioritätsstufen, die den mehreren sekundären Vorrichtungen (102a-n) entsprechen, in Bezug auf die mindestens eine sekundäre Vorrichtung,
wobei das Anzeigen der mehreren sekundären Vorrichtungen (102a-n) das Klassifizieren der mehreren sekundären Vorrichtungen (102a-n) gemäß den mehreren Prioritätsstufen und das Anzeigen der mehreren sekundären Vorrichtungen (102a-n) gemäß den mehreren Prioritätsstufen umfasst.

5. Verfahren nach Anspruch 4, wobei die mehreren Prioritätsstufen basierend auf der Hop-Anzahl, dem Besitz der mehreren sekundären Vorrichtungen, den Zugangspunkten, die den mehreren sekundären Vorrichtungen entsprechen, den Standorten der mehreren sekundären Vorrichtungen (102an), der Zugänglichkeit der primären Vorrichtung (104) und/oder der Anzahl der vorherigen Verbindungen bestimmt werden.

6. Verfahren nach Anspruch 1, wobei das Ändern des Verbindungsstatus oder -zustands Folgendes umfasst:
Identifizieren eines Dienstes, der von den beiden sekundären Vorrichtungen verfügbar ist; und
Ändern des Verbindungsstatus oder -zustands zwischen den beiden sekundären Vorrichtungen unter Verwenden des Dienstes.

7. Elektronische Vorrichtung (104), welche Folgendes umfasst:
ein Display (703);
einen Transceiver; und
einen Prozessor (702), der konfiguriert ist, um die Vorrichtungskonnektivität zwischen mehreren sekundären Vorrichtungen (102a-n) zu verwalten:
Erkennen aller sekundären Vorrichtungen (102a-n) innerhalb eines vordefinierten Bereichs,
Erfassen von Verlaufsinformationen von mindestens einer sekundären Vorrichtung der mehreren sekundären Vorrichtungen (102a-n), wobei die Verlaufsinformationen Informationen bezüglich einer aktuellen Verbindung und mindestens einer vorherigen Verbindung aus den mehreren sekundären Vorrichtungen (102a-n) enthalten;
Identifizieren mehrerer Verbindungszustände zwischen den mehreren sekundären Vorrichtungen (102a-n) basierend auf den Verlaufsinformationen ;
Steuern des Displays (703), um die mehreren sekundären Vorrichtungen (102a-n) und die mehreren Verbindungszustände zwischen den sekundären Vorrichtungen anzuzeigen; und
als Antwort auf das Empfangen einer Eingabe für zwei sekundäre Vorrichtungen der angezeigten mehreren sekundären Vorrichtungen, Steuern, um mindestens einen verfügbaren Dienst zwischen den beiden sekundären Vorrichtungen (102a-n) zu identifizieren, und Ändern eines Verbindungsstatus oder -zustands zwischen den beiden sekundären Vorrichtungen (102a-n) basierend auf dem mindestens einen verfügbaren Dienst.

8. Elektronische Vorrichtung (104) nach Anspruch 7, wobei der Prozessor (702) ferner konfiguriert ist zum:
periodischen Empfangen angekündigter Pakete von der mindestens einen sekundären Vorrichtung durch den Transceiver;
Bestimmen, dass zusätzliche Daten von der mindestens einen sekundären Vorrichtung verfügbar sind;
Herstellen einer Verbindung zwischen der elektronischen Vorrichtung (104) und der mindestens einen sekundären Vorrichtung;
Empfangen der zusätzlichen Daten von der mindestens einen sekundären Vorrichtung durch den Transceiver; und
Erfassen der Verlaufsinformationen aus den zusätzlichen Daten.

9. Elektronische Vorrichtung (104) nach Anspruch 7, wobei der Prozessor (702) ferner konfiguriert ist zum:
Identifizieren, ob die elektronische Vorrichtung (104) eine Berechtigung zum Steuern von Verbindungen hat, die jeder der mehreren sekundären Vorrichtungen (102a-n) entsprechen, und
Steuern des Displays (703), um eine sekundäre Vorrichtung anzuzeigen, für welche die elektronische Vorrichtung (104) die Berechtigung hat.

10. Elektronische Vorrichtung (104) nach Anspruch 7, wobei der Prozessor (702) ferner konfiguriert ist zum:
Identifizieren mehrerer Prioritätsstufen, die den mehreren sekundären Vorrichtungen (102a-n) entsprechen, in Bezug auf die mindestens eine sekundäre Vorrichtung;
Klassifizieren der mehreren sekundären Vorrichtungen (102a-n) gemäß den mehreren Prioritätsstufen; und
Steuern des Displays (703), um die mehreren sekundären Vorrichtungen (102a-n) gemäß den mehreren Prioritätsstufen anzuzeigen.

11. Elektronische Vorrichtung (104) nach Anspruch 10, wobei die mehreren Prioritätsstufen (102a-n) basierend auf einer Hop-Anzahl, dem Besitz der mehreren sekundären Vorrichtungen, den Zugangspunkten, die den mehreren sekundären Vorrichtungen entsprechen, den Standorten der mehreren sekundären Vorrichtungen, der Zugänglichkeit der primären Vorrichtung und/oder der Anzahl vorheriger Verbindungen bestimmt werden.

12. Elektronische Vorrichtung (104) nach Anspruch 10, wobei die beiden sekundären Vorrichtungen eine erste sekundäre Vorrichtung und eine zweite sekundäre Vorrichtung umfassen, und
wenn die erste sekundäre Vorrichtung mit einer dritten sekundären Vorrichtung der mehreren sekundären Vorrichtungen verbunden ist und die dritte sekundäre Vorrichtung dieselbe Prioritätsstufe wie die zweite sekundäre Vorrichtung hat, der Prozessor ferner konfiguriert ist zum:
Steuern zum Auflösen einer Verbindung zwischen der ersten sekundären Vorrichtung und der dritten sekundären Vorrichtung, und
Herstellen der Verbindung zwischen den beiden sekundären Vorrichtungen.

13. Elektronische Vorrichtung (104) nach Anspruch 7, wobei der Prozessor (702) ferner konfiguriert ist zum:
Identifizieren eines Dienstes, der von den beiden sekundären Vorrichtungen verfügbar ist; und
Ändern des Verbindungsstatus oder -zustands zwischen den beiden sekundären Vorrichtungen unter Verwenden des Dienstes.

14. Elektronische Vorrichtung (104) nach Anspruch 7, wobei der Prozessor ferner konfiguriert ist zum:
Steuern des Displays (703), um eine Liste von Diensten anzuzeigen, wobei die Liste den Dienst enthält; und
Ändern der Verbindung zwischen den beiden sekundären Vorrichtungen basierend auf dem Dienst, der aus der Liste ausgewählt wird.

15. Elektronische Vorrichtung (104) nach Anspruch 7, wobei der Prozessor ferner konfiguriert ist zum:
Aktualisieren der angezeigten mehreren Verbindungszustände, wenn der Verbindungsstatus oder -zustand der beiden sekundären Vorrichtungen geändert wird.

## Revendications

1. Procédé de gestion de connectivité de dispositif entre une pluralité de dispositifs secondaires (102a-n), par un dispositif primaire (104), le procédé comprenant :
détecter tous les dispositifs secondaires (102a-n) dans une zone prédéfinie,
acquérir des informations d'historique à partir d'au moins un dispositif secondaire de la pluralité de dispositifs secondaires (102a-n), les informations d'historique incluant des informations relatives à une connexion actuelle et au moins une connexion précédente parmi la pluralité de dispositifs secondaires (102a-n) ;
identifier une pluralité d'états de connexion entre la pluralité de dispositifs secondaires (102a-n) sur la base des informations d'historique ;
afficher la pluralité de dispositifs secondaires (102a-n) et la pluralité d'états de connexion entre la pluralité de dispositifs secondaires (102a-n) ; et
en réponse à la réception d'une entrée pour deux dispositifs secondaires de la pluralité affichée de dispositifs secondaires (102a-n), identifier au moins un service disponible entre le deux dispositifs secondaires (102a-n), et changer un état de connexion ou une connectivité entre les deux dispositifs secondaires (102a-n) sur la base de l'au moins un service disponible.

2. Procédé selon la revendication 1, où l'acquisition des informations d'historique comprend :
recevoir des paquets annoncés à partir de l'au moins un dispositif secondaire périodiquement ;
déterminer que des données supplémentaires sont disponibles à partir de l'au moins un dispositif secondaire ;
établir une connexion entre le dispositif primaire (104) et l'au moins un dispositif secondaire ;
recevoir les données supplémentaires à partir de l'au moins un dispositif secondaire ; et
acquérir les informations d'historique à partir des données supplémentaires.

3. Procédé selon la revendication 1, comprenant en outre :
identifier si le dispositif primaire (104) a une autorité pour contrôler des connexions correspondant à chacun de la pluralité de dispositifs secondaires (102a-n),
où l'affichage de la pluralité de dispositifs secondaires (102a-n) comprend l'affichage d'un dispositif secondaire sur lequel le dispositif primaire (104) a l'autorité.

4. Procédé selon la revendication 1, comprenant en outre :
identifier une pluralité de niveaux de priorité correspondant à la pluralité de dispositifs secondaires (102a-n) par rapport à l'au moins un dispositif secondaire,
où l'affichage de la pluralité de dispositifs secondaires (102a-n) comprend la classification de la pluralité de dispositifs secondaires (102a-n) selon la pluralité de niveaux de priorité, et l'affichage de la pluralité de dispositifs secondaires (102a-n) selon la pluralité de niveaux de priorité.

5. Procédé selon la revendication 4, où la pluralité de niveaux de priorité sont déterminés sur la base d'au moins l'un parmi le nombre de sauts, la propriété de la pluralité de dispositifs secondaires, des points d'accès correspondant à la pluralité de dispositifs secondaires, des positions de la pluralité de dispositifs secondaires (102a-n), l'accessibilité du dispositif primaire (104), et le nombre de connexions précédentes.

6. Procédé selon la revendication 1, où le changement de l'état de connexion ou de la connectivité comprend :
l'identification d'un service disponible à partir des deux dispositifs secondaires ; et
le changement de l'état de connexion ou de la connectivité entre les deux dispositifs secondaires utilisant le service.

7. Dispositif électronique (104) comprenant :
une unité d'affichage (703) ;
un émetteur-récepteur ; et
un processeur (702) configuré pour gérer une connectivité de dispositif entre une pluralité de dispositifs secondaires (102a-n) :
détecter tous les dispositifs secondaires (102a-n) dans une zone prédéfinie,
acquérir des informations d'historique à partir d'au moins un dispositif secondaire de la pluralité de dispositifs secondaires (102a-n), les informations d'historique incluant des informations relatives à une connexion actuelle et au moins à une connexion précédente parmi la pluralité de dispositifs secondaires (102a-n) ;
identifier une pluralité d'états de connexion entre la pluralité de dispositifs secondaires (102a-n) sur la base des informations d'historique ;
commander l'unité d'affichage (703) pour afficher la pluralité de dispositifs secondaires (102a-n) et la pluralité d'états de connexion entre les dispositifs secondaires ; et
en réponse à la réception d'une entrée pour deux dispositifs secondaires de la pluralité affichée de dispositifs secondaires, commander pour identifier au moins un service disponible entre les deux dispositifs secondaires (102a-n), et changer un état de connexion ou une connectivité entre les deux dispositifs secondaires (102a-n) sur la base de l'au moins un service disponible.

8. Dispositif électronique (104) selon la revendication 7, où le processeur (702) est configuré en outre pour :
recevoir des paquets annoncés à partir de l'au moins un dispositif secondaire périodiquement par l'émetteur-récepteur ;
déterminer que des données supplémentaires sont disponibles à partir de l'au moins un dispositif secondaire ;
établir une connexion entre le dispositif électronique (104) et l'au moins un dispositif secondaire ;
recevoir les données supplémentaires à partir de l'au moins un dispositif secondaire par l'émetteur-récepteur ; et
acquérir les informations d'historique à partir des données supplémentaires.

9. Dispositif électronique (104) selon la revendication 7, où le processeur (702) est configuré en outre pour :
identifier si le dispositif électronique (104) a une autorité pour contrôler des connexions correspondant à chacun de la pluralité de dispositifs secondaires (102a-n), et
commander l'unité d'affichage (703) pour afficher un dispositif secondaire sur lequel le dispositif électronique (104) a l'autorité.

10. Dispositif électronique (104) selon la revendication 7, où le processeur (702) est configuré en outre pour :
identifier une pluralité de niveaux de priorité correspondant à la pluralité de dispositifs secondaires (102a-n) par rapport à l'au moins un dispositif secondaire ;
classifier la pluralité de dispositifs secondaires (102a-n) selon la pluralité de niveaux de priorité ; et
commander l'unité d'affichage (703) pour afficher la pluralité de dispositifs secondaires (102a-n) selon la pluralité de niveaux de priorité.

11. Dispositif électronique (104) selon la revendication 10, où la pluralité de niveaux de priorité (102a-n) sont déterminés sur la base d'au moins l'un parmi le nombre de sauts, la propriété de la pluralité de dispositifs secondaires, les points d'accès correspondant à la pluralité de dispositifs secondaires, des positions de la pluralité de dispositifs secondaires, l'accessibilité du dispositif primaire et le nombre de connexions précédentes.

12. Dispositif électronique (104) selon la revendication 10, où les deux dispositifs secondaires comprennent un premier dispositif secondaire et un deuxième dispositif secondaire, et
si le premier dispositif secondaire est connecté à un troisième dispositif secondaire de la pluralité de dispositifs secondaires et que le troisième dispositif secondaire a un même niveau de priorité que le deuxième dispositif secondaire, le processeur est configuré en outre pour :
commander pour désactiver une connexion entre le premier dispositif secondaire et le troisième dispositif secondaire, et
établir la connexion entre les deux dispositifs secondaires.

13. Dispositif électronique (104) selon la revendication 7, où le processeur (702) est configuré en outre pour :
identifier un service disponible à partir des deux dispositifs secondaires ; et
changer l'état de connexion ou la connectivité entre les deux dispositifs secondaires utilisant le service.

14. Dispositif électronique (104) selon la revendication 7, où le processeur est configuré en outre pour :
commander l'unité d'affichage (703) pour afficher une liste de services, la liste incluant le service ; et
changer la connexion entre les deux dispositifs secondaires sur la base du service sélectionné dans la liste.

15. Dispositif électronique (104) selon la revendication 7, où le processeur est configuré en outre pour :
mettre à jour la pluralité affichée d'états de connexion lorsque l'état de connexion ou la connectivité des deux dispositifs secondaires est changé.
